(19) Europäisches Patentamt
European Patent Office
Office européen des brevets

(11) **EP 2 415 735 A2**

(12) **EUROPEAN PATENT APPLICATION**

(43) Date of publication:
**08.02.2012 Bulletin 2012/06**

(51) Int Cl.:
***C04B 35/83*** *(2006.01)*

(21) Application number: **11176554.1**

(22) Date of filing: **04.08.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.08.2010 JP 2010174968**

(71) Applicant: **Ibiden Co., Ltd.**
**Ogaki-shi**
**Gifu 503-8604 (JP)**

(72) Inventors:
• **Kato, Hideki**
  **Gifu, 503-8503 (JP)**
• **Shikano, Haruhide**
  **Gifu, 503-8503 (JP)**
• **Ando, Tomoyuki**
  **Gifu, 503-8503 (JP)**

(74) Representative: **HOFFMANN EITLE**
**Patent- und Rechtsanwälte**
**Arabellastraße 4**
**81925 München (DE)**

(54) **Carbon fiber-reinforced carbon composite material and method for manufacturing the same**

(57)     A carbon fiber-reinforced carbon composite material and a method for manufacturing the same are provided. The carbon fiber-reinforced carbon composite material includes carbon fibers, and a carbonaceous matrix. The carbon fiber-reinforced carbon composite material is integrally formed. The carbon fibers are a linear fiber existing in a bare-fiber state within the carbonaceous matrix and having an average fiber length of less than 1.0 mm. The carbon fiber-reinforced carbon composite material has a bulk density of 1.2 g/cm$^3$ or more.

FIG. 1A

100

EP 2 415 735 A2

FIG. 1B          FIG. 1C          FIG. 1D

**Description**

BACKGROUND OF THE INVENTION

Field of the Invention

The present invention relates to a carbon fiber-reinforced carbon composite material and a method for manufacturing the same. In particular, the present invention relates to a molded body of a carbon fiber-reinforced carbon composite material including carbon fibers and a carbonaceous matrix and a method for manufacturing the same.

Description of the Related Art

Since carbon fibers have high heat resistance and strength, they are used as a carbon fiber reinforced carbon composite material (C/C composite material) including the carbon fibers and a carbon matrix in various fields requiring heat resistance, chemical stability and strength. The C/C composite material includes various kinds depending upon a compositing method of carbon fibers, and various carbon fiber molded bodies can be formed by using the same.

The C/C composite material is comprised of a matrix made of a carbide such as a pitch and a thermosetting rein, and carbon fibers. There are various C/C composite materials depending upon a fixing method of carbon fibers such as a cloth laminating method using a carbon fiber cloth, a filament winding method using carbon fiber filaments, a method using a carbon fiber felt, or a sheet-forming method using a carbon fiber sheet-formed body.

The cloth laminating method is a method of obtaining a C/C composite material by laminating a woven fabric made of carbon fibers, impregnating the woven fabric with a matrix precursor such as a pitch and a thermosetting resin, followed by curing and calcination (see JP-A-H11-60373). A C/C composite material in a plate form can be obtained by laminating planar woven fabrics and uniaxially pressing the laminate. Also, a C/C composite material in a complicated shape of the papier-mache form can be obtained by sticking small cut woven fabric pieces to a die in a three-dimensional shape. Furthermore, a C/C composite material in a cylindrical shape can also be obtained by winding a planar woven fabric in a roll form while applying a pressure thereto and laminating it (cloth winding method).

The filament winding method is a method of obtaining a C/C composite material by winding a strand of carbon fibers around a mandrel while applying a tension thereto and then impregnating the wound strand with a matrix precursor such as a pitch and a thermosetting resin, followed by curing and calcination (see JP-A-H10-152391).

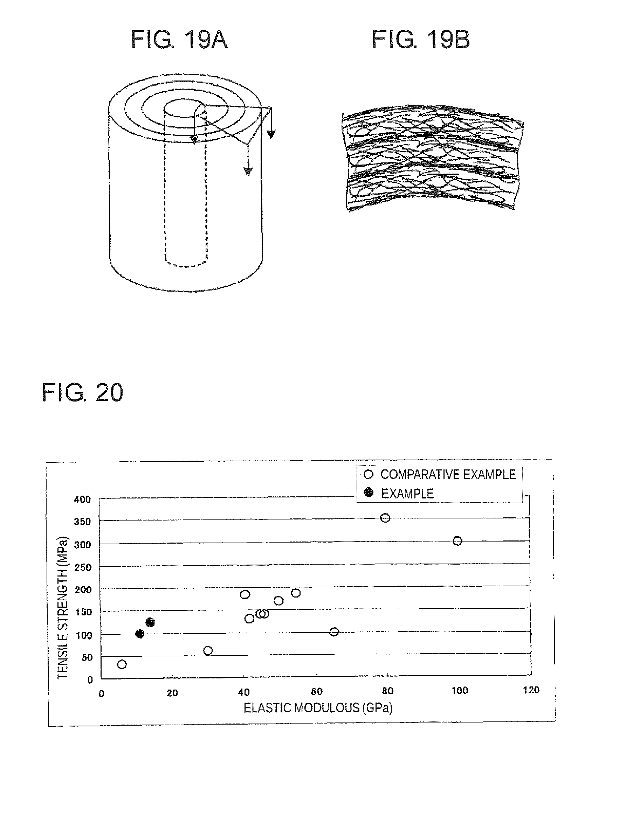

The method using a carbon fiber felt is a method of obtaining a C/C composite material by laminating long fibers of carbon fibers in a felt-like form and impregnating the laminate with a matrix precursor such as a pitch and a thermosetting resin, followed by curing and calcination (see JP-A-2000-143360). Similar to the cloth laminating method, according to this method, a planar C/C composite material, a cylindrical C/C composite material and a C/C composite material having a complicated shape can also be obtained. In particular, a cylindrical C/C composite material can also be obtained by winding up a planar felt in a roll form while applying a pressure thereto, followed by lamination (cloth winding method; see, for example, Figs. 19A and 19B).

According to the sheet-forming method, the C/C composite material of a sheet-forming method is obtained by suspending carbon fibers in a liquid to form a slurry, dipping a suction die having an aperture in this slurry, allowing the liquid in the slurry to pass into a rear surface of the suction die and depositing carbon fibers on the surface side of this suction die to form a molded material, following by drying and calcination (see JP-A-2002-68851 and JP-A-2002-97082).

SUMMARY OF THE INVENTION

However, the foregoing C/C composite materials involve the following problems.

In the carbon fibers, since a hexagonal plane of graphite is strongly oriented in a longitudinal direction of the fibers, the carbon fibers are small in a coefficient of thermal expansion as about 1 PPM/°C and high in an elastic modulus as compared with general graphite materials. C/C composite materials prepared using such carbon fibers as a major raw material take over properties of carbon fibers and have the same characteristic features as those of the carbon fibers such that they have a small coefficient of thermal expansion and a high elastic modulus. When a combination of such a C/C composite material with a general graphite material is, for example, used as a high-temperature member of a furnace, there may be the case where a difference in thermal expansion between the general graphite material having a coefficient of thermal expansion of from 3 to 5 PPM/°C and the C/C composite material is likely to generate a thermal stress, thereby easily causing breakage of the graphite material and/or the C/C composite material.

Also, in the C/C composite material itself, there may be the case where an exposed portion thereof reacts with a reactive gas in a furnace, for example, silicon or the like and converts into a compound having a different coefficient of thermal expansion, such as SiC (coefficient of thermal expansion: 4 PPM/°C). In that case, there may be the case where a thermal stress is likely to be generated between the remaining C/C composite material and the reacted and converted carbide, thereby easily forming a crack on the side of the carbide and/or the C/C composite material, or causing separation.

The present invention has been made in view of the above circumstances, and an object of the present invention is to provide a C/C composite material in which even when used in combination with other member such as a general graphite material, breakage to be caused due to an interaction of a difference in the coefficient of thermal expansion or the like is hardly generated, and even when a carbide is formed with a reactive gas, separation and/or breakage to be caused due to the generation of a thermal stress is hardly generated.

An embodiment of the present invention provides the following:

[1] A carbon fiber-reinforced carbon composite material comprising:

carbon fibers; and
a carbonaceous matrix,
wherein the carbon fiber-reinforced carbon composite material is integrally formed;
wherein the carbon fibers are a linear fiber existing in a bare-fiber state within the carbonaceous matrix and having an average fiber length of less than 1.0 mm, and
wherein the carbon fiber-reinforced carbon composite material has a bulk density of 1.2 g/cm$^3$ or more.

[2] The carbon fiber-reinforced carbon composite material according to [1],
wherein the carbon fiber-reinforced carbon composite material has an elastic modulus ranging from 5 GPa to 15 GPa.
[3] The carbon fiber-reinforced carbon composite material according to [1] or [2],
wherein the carbon fiber-reinforced carbon composite material has a tensile strength of 50 MPa or more.
[4] The carbon fiber-reinforced carbon composite material according to any one of [1] to [3],
wherein the carbon fiber-reinforced carbon composite material has a fiber volume fraction ranging from 30 % to 50 %.
[5] The carbon fiber-reinforced carbon composite material according to any one of [1] to [4],
wherein the carbon fiber-reinforced carbon composite material is used for a structural member of a furnace.
[6] The carbon fiber-reinforced carbon composite material according to any one of [1] to [5],
wherein the carbon fiber-reinforced carbon composite material is used for a semiconductor manufacturing apparatus.
[7] A method for manufacturing a carbon fiber-reinforced carbon composite material according to any one of [1] to [6], the method comprising:

spreading linear carbon fibers having an average fiber length of less than 1.0 mm into a bare fiber;
forming a preform including the linear carbon fibers and a precursor component of a carbonaceous matrix, in which the carbon fibers are present in a bare-fiber state;
integrally press molding the preform; and
calcining the press molded preform to form the carbonaceous matrix from the precursor component.

[8] The method according to [7],
wherein the step of spreading the liner carbon fibers is a step of adding and dispersing the precursor component of the carbonaceous matrix and the linear carbon fibers having the average fiber length of less than 1.0 mm, in a liquid, thereby forming a slurry for spreading the carbon fibers; and
wherein the step of forming the preform includes a step of forming flocks including the carbon fibers and the precursor component of the carbonaceous matrix and a step of filtering the flocks.

According to the above configuration, sheet-forming is performed after forming flocks of short carbon fibers, and the flocks are jointed with a binder. Therefore, since the carbon fibers are short, a rate at which the matrix component receives a stress increases and a function of the carbon fibers to regulate deformation of the matrix within the C/C composite material can be weakened, a soft C/C composite material can be obtained. Further, since the carbon fibers are present in a bare-fiber state within a carbonaceous matrix, a joint area with a matrix can be increased. That is, even with a short fiber, the joint area of the fiber with the matrix is large, and therefore, the high strength C/C composite fiber can be obtained. According to such soft C/C composite material, even if it is combined with a member of other material, the breakage of the C/C composite itself or the breakage of the member of other material due to the difference in the thermal expansion and the like can be prevented.

BRIEF DESCRIPTION OF THE DRAWINGS

The above and other aspects of the present invention will become more apparent and more readily appreciated from the following description of illustrative embodiments of the present invention taken in conjunction with the attached drawings, in which:

Figs. 1A to 1D are views showing a molded body of Embodiment 1 of the present invention, specifically, Fig. 1A is a perspective view; Fig. 1B is a sectional view; Fig. 1C is an enlarged view of a part of Fig. 1B; and Fig. 1D is a more enlarged view of a part of Fig. 1C;

Figs. 2A to 2C are conceptual views showing dynamic characteristic features of a C/C composite material, specifically, Fig. 2A is a conceptual view of a C/C composite material of an embodiment of the present invention; Fig. 2B is a conceptual view of a C/C composite material according to a conventional cloth laminating method; and Fig. 2C is a conceptual view of a C/C composite material according to a conventional method using a felt;

Fig. 3 is a step flow chart of a manufacturing method of a molded body of Embodiment 1;

Figs. 4A1 to 4D are outline views showing a manufacturing method of a molded body of Embodiment 1;

Figs. 5A to 5D are views showing a molded body of Embodiment 2, specifically, Fig. 5A is a perspective view; Fig. 5B is a sectional view; Fig. 5C is an enlarged view of a part of Fig. 5B; and Fig. 5D is a more enlarged view of a part of Fig. 5C;

Figs. 6B to 6D are outline views showing a manufacturing method of a molded body of Embodiment 2;

Fig. 7A is a photograph of a section of a molded body of Example 1, and Fig. 7B is a photograph of a section of a molded body of Comparative Example 1;

Fig. 8A is an enlarged photograph of the surface of a molded body of Example 1; Fig. 8B is a photograph of thin piece bodies observed on the surface of the molded body of Fig. 8A; and Fig. 8C is a photograph of thin piece bodies separated from the surface of the molded body of Fig. 8A;

Fig. 9A is a scanning electron microscopic photograph of a section of a molded body of Comparative Example 1, and Fig. 9B is a schematic view of Fig. 9A;

Figs. 10A to 10C are a scanning electron microscopic photographs of a section of a molded body of Example 1, specifically, Fig. 10A is a photograph with a magnification of 100; Fig. 10B is a photograph with a magnification of 200; and Fig. 10C is a photograph with a magnification of 500;

Figs. 11A to 11C are scanning electron microscopic photographs of a section of a molded body of Comparative Example 1, specifically, Fig. 11A is a photograph with a magnification of 50; Fig. 11B is a photograph with a magnification of 200; and Fig. 11C is a photograph with a magnification of 500;

Figs. 12A and 12B are views showing a molded body of Embodiment 3, specifically, Fig. 12A is a perspective view, and Fig. 12B is a sectional schematic view;

Figs. 13A to 13C are outline views showing a manufacturing method of a molded body of Embodiment 3;

Figs. 14A and 14B are views showing a molded body of Embodiment 4, specifically, Fig. 14A is a perspective view, and Fig. 14B is a sectional schematic view;

Figs. 15A and 15B are outline views showing a manufacturing method of a molded body of Embodiment 4;

Figs. 16A and 16B are views showing a molded body of Embodiment 5, specifically, Fig. 16A is a perspective view, and Fig. 16B is a sectional schematic view;

Figs. 17A to 17D are views showing a molded body of Embodiment 6, specifically, Fig. 17A is a perspective view; Fig. 17B is a sectional view; Fig. 17C is an enlarged view of a part of Fig. 17B: and Fig. 17D is a more enlarged view of a part of Fig. 17C;

Figs. 18A1 to 18D are outline views showing a manufacturing method of a molded body of Embodiment 6;

Figs. 19A and 19B are views of a molded body of Comparative Example 1, specifically, Fig. 19A is a perspective view, and Fig. 19B is a sectional view;

Fig. 20 is a graph showing the results obtained by measuring a relation of elastic modulus and breaking strength of each of C/C composite materials of Examples and Comparative Examples;

Fig. 21 is a graph showing the results obtained by measuring a relation of elastic modulus and breaking strain of each of C/C composite materials of Examples and Comparative Examples;

Figs. 22A and 22B are schematic views showing a cut-out direction and a three-point bending test direction of a sample for measuring physical properties of each of C/C composite materials of Examples and Comparative Examples; and

Fig. 23A is a polarizing microscopic photograph of a section of a molded body of Example 1, and Fig. 23B is a polarizing microscopic photographic of a section of a molded body of Comparative Example 1.

## DETAILED DESCRIPTION

Illustrative embodiments of the present invention will be described by reference to the drawings.

(Embodiment 1)

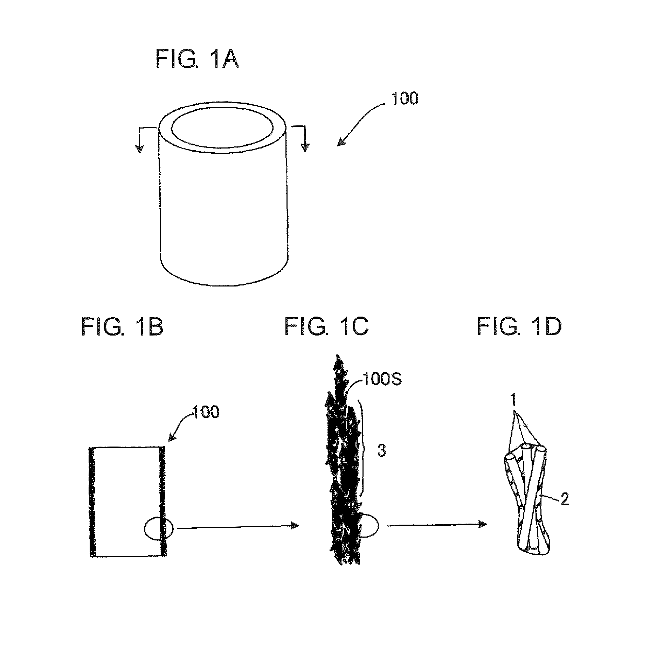

A molded body (hereinafter referred to as "C/C composite material molded body") of a carbon fiber-reinforced carbon composite material (hereinafter referred to as "C/C composite material") of Embodiment 1 of the present invention is described on the basis of Figs. 1A to 1D.

Fig. 1 A is a perspective view of a C/C composite material molded body 100 of the present Embodiment 1. Figs. 1B to 1D are a sectional view of Fig. 1A, an enlarged view of a part thereof and a more enlarged view of a part, respectively.

The C/C composite material according to an embodiment of the present invention is an integrally formed material. That is, the C/C composite material according to the embodiment of the present invention is not a material formed by laminating preforms.

In this C/C composite material molded body, carbon fibers are present in a bare-fiber state within a carbonaceous matrix. The carbon fibers are a linear fiber having an average fiber length of less than 1.0 mm, and this C/C composite material molded body has a bulk density of 1.2 g/cm$^3$ or more.

As shown in Figs. 1C and 1D, in this C/C composite material molded body 100, in the majority of carbon fibers 1, a longitudinal direction of the fibers is oriented in a surface direction of the molded body 100 within a carbonaceous matrix 2, whereby thin piece bodies (sheet-like small pieces) 3 are formed. The C/C composite material molded body 100 according to an embodiment of the present invention is configured by a laminate of the thin piece bodies 3.

According to this configuration, since the average fiber length of the carbon fibers is short as less than 1.0 mm, a rate at which the matrix component receives a stress increases, a function of the carbon fibers to regulate deformation of the matrix within the C/C composite material can be weakened, and a degree of influence against an elastic modulus on the carbon fibers can be made larger than that on the matrix component, and therefore, the elastic modulus of the C/C composite material can be lowered.

Also, since the carbon fibers are present in a bare-fiber state, a bonding surface area to the matrix can be increased. Furthermore, when carbon fibers are bundled, a portion where the matrix is not filled between the carbon fibers is weak in strength; however, in the constitution of the invention in which the carbon fibers are present in a bare-fiber state, such a portion is not present. As a result, crack propagation hardly occurs, and high strength can be revealed. The bare-fiber state as referred to herein means a state where the carbon fibers do not form a strand.

Furthermore, since the C/C composite material according to an embodiment of the present invention is configured by a linear (acicular) carbon fiber, the carbon fibers are easy to intersect with each other by means of piercing, and an adhesive force is strong. The linear carbon fiber as referred to herein means that the carbon fiber extends linearly without being bent. According to this, in view of the fact that the carbon fibers pierce at the time of sheet-forming or at the time of molding, the carbon fibers are able to intersect with each other, whereby a C/C composite material with high strength can be obtained.

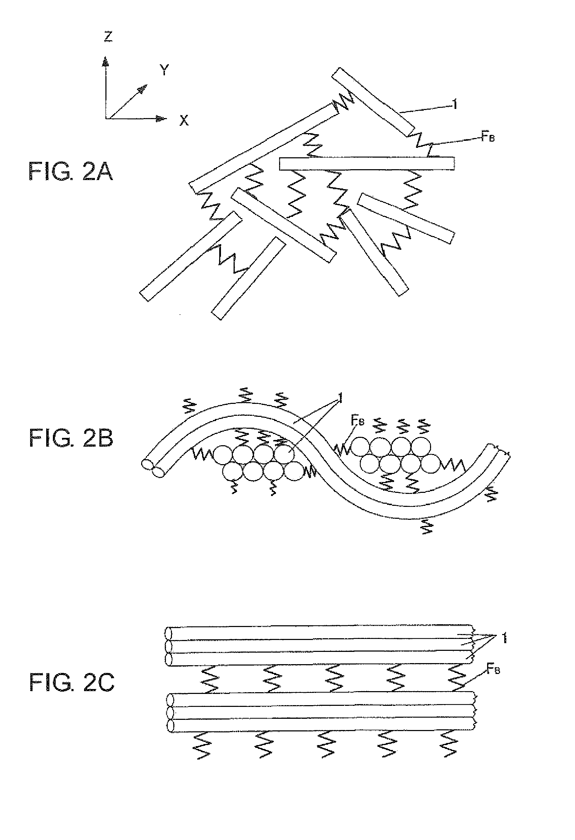

A characteristic feature of the C/C composite material according to an embodiment of the present invention resides in that very short carbon fibers having an average fiber length of less than 1.0 mm are present in a bare-fiber state. Here, in general, carbon fibers are characterized by having properties of high strength and high elasticity. Such a dispersion state of carbon fibers influences dynamic characteristic features of the C/C composite material. This point is described by reference to Figs. 2A to 2C.

Figs. 2A to 2C are conceptual views showing dynamic characteristic features of a C/C composite material, specifically, Fig. 2A is a conceptual view of the C/C composite material of an embodiment of the present invention; Fig. 2B is a conceptual view of a C/C composite material according to a conventional cloth laminating method; and Fig. 2C is a conceptual view of a C/C composite material according to a conventional method using a felt. In Figs. 2A to 2C, 1 represents a carbon fiber, and $F_B$ represents coupling by the matrix. Incidentally, the X-direction is a horizontal direction of the drawing; the Y-direction is a vertical direction of the drawing; and the Z-direction is a longitudinal direction of the drawing.

In the C/C composite material according to a cloth laminating method shown in Fig. 2B, since an extremely long fiber is used as the carbon fiber, the dynamic characteristic features of the C/C composite material are significantly influenced by the characteristic features of the carbon fibers but hardly influenced by those of the matrix. However, the characteristic features of the carbon fibers influence in two directions (X-and Y-directions) in which the longitudinal direction of the fibers is mainly oriented. In view of the fact that in a laminating direction (thickness direction, i.e., Z-direction), coupling between the carbon fibers is not present, but only coupling by the matrix is present, it may be considered that the characteristic features of the carbon fibers are hardly reflected.

Also, in the C/C composite material according to a filament winding method shown in Fig. 2C, similar to the cloth laminating method, a long fiber of carbon fiber is used, and therefore, the dynamic characteristic features of the C/C composite material are significantly influenced by properties of the carbon fiber itself. In that case, the characteristic features of the carbon fibers influence in one direction (X-direction) in which the longitudinal direction of the fibers is mainly oriented. However, characteristic features of the carbon fibers may also slightly influence in the Y-direction depending upon a winding manner of the fibers. Similar to the cloth laminating method, in view of the fact that in a laminating direction (thickness direction, i.e., Z-direction), coupling between the carbon fibers is not present, it may be considered that only coupling by the matrix is present, it may be considered that sufficient strength cannot be obtained.

On the other hand, the C/C composite material according to an embodiment of the present invention in which short carbon fibers are present in a bare-fiber state shown in Fig. 2A is different in the dynamic characteristic features from the C/C composite material composed of long carbon fibers shown in the foregoing Fig. 2B or 2C. That is, in the C/C composite material according to an embodiment of the present invention, short carbon fibers are present in a bare-fiber state, and the matrix connecting the bare fibers to each other has a role as a binder. Also, different from the C/C composite material shown in the foregoing Fig. 2B or 2C, in the C/C composite material of an embodiment of the present invention shown in Fig. 2A, since the carbon fibers are present in a bare-fiber state, a joint area connecting the carbon fibers to each other can be increased. As a result, there is not present a portion with weak strength in which the carbon fibers form a strand, whereby the matrix is not filled between the carbon fibers. Thus, crack propagation hardly occurs, so that the C/C composite material according to an embodiment of the present invention is able to reveal high strength.

It may be considered that the elastic modulus of the C/C composite material according to an embodiment of the present invention is influenced by the matrix portion rather than the carbon fibers. A resin, a pitch or the like serving as a raw material of the matrix generates a gas in a process of carbonization, and therefore, pores are formed in the matrix. It may be considered that when pores are formed, the pores absorb deformation, whereby the elastic modulus can be lowered. In consequence, even though carbon fibers with a high elastic modulus are used, a soft C/C composite material can be obtained.

Incidentally, according to the conventional methods described in JP-A-2002-68851 and JP-A-2002-97082, in which after the slurry of carbon fibers is directly filtered (sheet-formed), carbon is deposited in the inside of pores of the sheet-formed body, a hard and minute film is formed on the fiber surface and laminated, and therefore, a C/C composite material with high elasticity which is free from the formation of pores in the matrix is formed. On the other hand, in the C/C composite material according to an embodiment of the present invention, since a soft matrix component is filled, a C/C composite material with low elasticity is obtainable.

In the embodiment of the present invention, a fiber volume fraction is preferably from 30% to 50 %. When the fiber volume fraction is less than 30 %, a fiber-to-fiber distance is too far, so that there is a concern that sufficient strength cannot be revealed. Also, when the fiber volume fraction is not more than 50 %, the fibers can intersect with each other. On the other hand, when the fiber volume fraction exceeds 50 %, instead of the fact that a fiber-free portion is reduced, there may be the case where the direction of the fibers are made in the same direction, and a direction with weak strength is produced. The fiber volume fraction as referred to in the invention means one obtained by dividing a volume occupied by the carbon fibers, by a volume of the whole of the C/C composite material. A calculation method of the fiber volume fraction is described later.

Also, a bulk density of the C/C composite material according to the embodiment of the present invention is preferably 1.2 g/cm$^3$ or more, and more preferably 1.3 g/cm$^3$ or more. Since the C/C composite body has a bulk density of 1.2 g/cm$^3$ or more, the pores are buried, and connection (bonding) between the fibers becomes strong. Incidentally, the bulk density of the C/C composite material is desirably not more than 1.8 g/cm$^3$. When the bulk density of the C/C composite material exceeds 1.8 g/cm$^3$, a gas generated at the time of calcination of the molded body does not come out, and swelling of the molded body or interlayer separation is easy to occur. As a result, tenacity is lost, and when broken, the shape is hardly kept.

The carbon fibers in the embodiment of the present invention are configured as a linear fiber. Since the carbon fibers are configured as a linear carbon fiber, the carbon fibers pierce at the time of sheet-forming or molding and are easy to intersect with each other. Thus, a C/C composite material with high strength is obtainable. Then, the carbon fibers form a thin piece body (as described later) in which a longitudinal direction of the fibers is oriented in a curved surface direction of the molded body within the carbonaceous matrix. The C/C composite material molded body is configured by a laminate of the thin piece bodies.

According to this configuration, the carbonaceous matrix 2 is filled and constituted so as to intervene between the carbon fibers 1 constituting the thin piece bodies 3, thereby fixing the carbon fibers each other. Furthermore, since the thin piece bodies 3 are laminated in such a manner that fallen leaves are piled up at random, the ends of the thin piece bodies are dispersed in many places of the inside of the carbon fiber molded body. In other words, the thin piece bodies are disposed such that ends of the thin piece bodies adjoining in a laminating direction of the thin piece body to each other are deviated in the laminating direction. According to this, the ends of the thin piece bodies do not overlap, so that a defect (boundary of the thin piece body) which is structurally weak, thereby causing separation or formation of a crack is finely dispersed. In the meantime, in the case where a large defect is present in one place, the stress concentration tends to occur and this large defect becomes a notch, thereby easily causing a lowering of the strength. On the other hand, when a defective portion is finely dispersed as in an embodiment of the present invention, a stress to be applied to the defective portion can be dispersed. For that reason, a carbon fiber molded body which is apparently homogenous and free from a defect can be obtained. Since the C/C composite material molded body according to an embodiment of the present invention has such a structure, a C/C composite material molded body which is high in heat resistance and high in strength even at a high temperature can be obtained.

An average major axis diameter of the thin piece body is preferably from 1 to 10 mm, and more preferably from 2 to 5 mm. When the average major axis diameter of the thin piece body is less than 1.0 mm, since the size of the corresponding flock piece becomes small, the hydraulic resistance tends to become large at the time of sheet-forming, and a thick-walled C/C composite material molded body is hardly obtainable. On the other hand, when the average major axis diameter of the thin piece body exceeds 10 mm, in laminating a flock serving as a base of the thin piece body in a manufacturing step as described later, in view of the fact that a central part and a peripheral part are different in easiness of aggregation from each other, segregation of a fiber and a binder is easy to occur, and therefore, a binder component in the inside of the thin piece body is also easy to cause segregation. Also, when the average major axis diameter of the thin piece body exceeds 10 mm, even when the binder is melted in subsequent molding and curing, the thin piece body cannot sufficiently flow, whereby the segregation is hardly relieved. As a result, a portion which is thin in the binder is formed, whereby there is a concern that the strength of the molded body is lowered.

An average thickness of the thin piece body is preferably from 0.05 to 1.0 mm, and more preferably from 0.1 to 0.5 mm. When the average thickness of the thin piece body is less than 0.05 mm, the size of the corresponding flock becomes small, the hydraulic resistance tends to become large, and a thick-walled C/C composite material molded body is hardly obtainable. When the average thickness of the thin piece body exceeds 1.0 mm, a void is formed in an end of the thin piece body, and stress concentration is easily generated in the surroundings of the void, whereby there is a concern that the strength of the molded body is lowered.

Also, an average fiber length of the carbon fibers which are used for the C/C composite material is preferably less than 1.0 mm, more preferably 50 $\mu$m or more and less than 1.0 mm, and still more preferably from 50 to 500 $\mu$m. When the average fiber length of the carbon fibers is 1.0 mm or more, since the carbon fibers strongly restrain the C/C composite material, the influence of the elastic modulus of the fibers also appears on the C/C composite material. When the average fiber length of the carbon fibers is less than 50 $\mu$m, the fibers cannot sufficiently get tangled with each other, so that the strength cannot be enhanced.

Also, it is preferable that the C/C composite material according to an embodiment of the present invention is molded by means of a sheet-forming method. However, in general, according to the sheet-forming method, a sheet-formed body is obtained by filtering fibers dispersed in water, or the like; whereas according to an embodiment of the present invention, by adding an aggregating agent to the carbon fibers dispersed in water and a binder powder (first binder) to form flocks, which are then subjected to sheet-forming to mold a sheet-formed body. Since the sheet-formed body is formed after forming flocks composed of carbon fibers and a binder powder, partial scattering in concentration between the carbon fibers and the binder powder within the flock is hardly generated, so that a uniform thick-walled sheet-formed body can be obtained. Different from the embodiment of the present invention, in the case of undergoing sheet-forming without forming a frock, the sheet-formed body becomes non-uniform due to a difference in sedimentation rate between the carbon fibers and the binder powder and a difference in sedimentation rate due to the fiber length or particle diameter, a defective portion with a weak bonding force and a site where only short fibers segregate are generated, and the strength is easily lowered. Therefore, a thick-walled sheet-formed bod with high strength is hardly obtainable.

The C/C composite material according to an embodiment of the present invention preferably has an elastic modulus of from 5GPa to 15GPa. In the case where the elastic modulus of the C/C composite material exceeds 15 GPa, when used as a structural member of a furnace in combination with other member such as graphite, at the time of coming into contact with each other, a stress generated because of an elastic modulus of the C/C composite material becomes large due to a difference in thermal expansion from other member, thereby causing breakage of the graphite member or the C/C composite material. In the case where the elastic modulus of the C/C composite material is less than 5 GPa, not only the strength of the carbon fiber-reinforced carbon composite material is easily lowered, but because of a small elastic modulus as compared with that of the graphite member, the C/C composite material exceeds an elastic limit and is deformed, whereby it does not return to the original shape.

The C/C composite material according to an embodiment of the present invention preferably has a tensile strength of 50 MPa or more. In the case where the tensile strength of the C/C composite material is less than 50 MPa, when used as a structural member of a furnace, the C/C composite material is easily broken, and there is a concern that it cannot be safely used. In the C/C composite material according to an embodiment of the present invention, since the fibers and the binder are uniformly dispersed, even though short fibers having an average fiber length of less than 1.0 mm are used, the C/C composite material forms flocks, uniformly disperses the binder in the flocks and hardly causes segregation of the carbon fibers. Thus, a defect-free C/C composite material with thigh strength can be obtained.

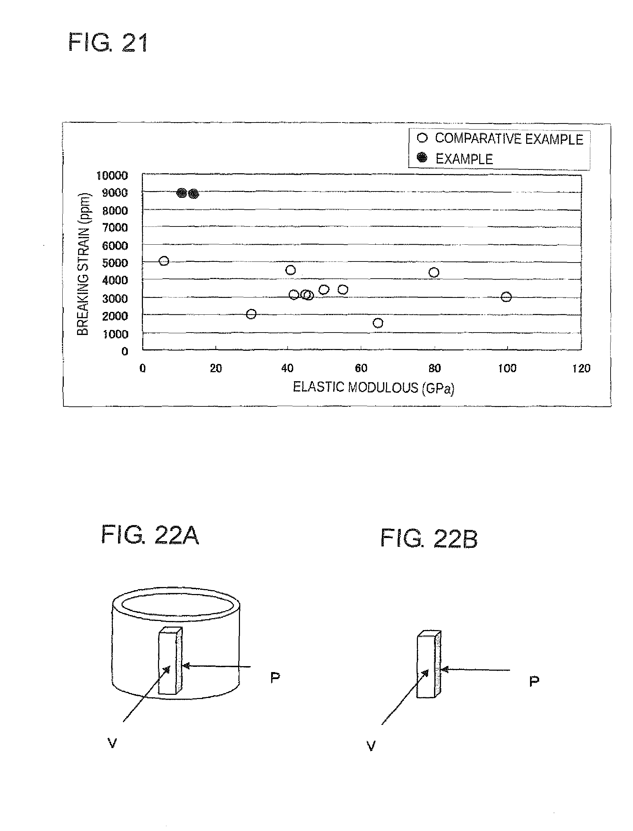

As shown in Examples (see Figs. 20 and 21) as described later, the C/C composite material according to an embodiment of the present invention is able to make a value of the elastic modulus relative to the strength low. A relation among elastic modulus, stress and strain can be expressed by the following equation (1).

$$\text{Stress} = (\text{Elastic modulus}) \times (\text{Strain}) \qquad (1)$$

In particular, at a point of time of reaching the breakage, there is a relation expressed by the following equation (2).

$$\text{(Breaking strength)} = \text{(Elastic modulus)} \times \text{(Breaking strain)} \quad (2)$$

In consequence, from the equation (2), the breaking strain is in a relation expressed by the following equation (3).

$$\text{(Breaking strain)} = \text{(Breaking strength)} \times \text{(Elastic modulus)} \quad (3)$$

That is, a material having low elasticity and large breaking strain is not broken until a large displacement is applied. It may be considered that such a characteristic feature is able to increase a strain (breaking strain) at the time of reaching breakage, and in a member to be used at a high temperature at which a large strain is easily given, the member is hardly broken.

Also, in the case where the C/C composite material according to an embodiment of the invention is used and joined as a structural part of a furnace made of graphite, alumina, zirconia, SiC or the like, or a joining part such as a bolt, there is similarly obtainable an effect for hardly breaking the structural part of a furnace or the joining part.

Since the C/C composite material is small in a coefficient of thermal expansion as compared with the structural part made of graphite, alumina, zirconia, SiC or the like, when the structural part is fastened at room temperature (about 25 °C) using a joining part such as a C/C composite material-made bolt, and the temperature is then raised, the C/C composite material-made joining part is pulled, thereby generating a thermal strain. Since the C/C composite material according to an embodiment of the present invention is small in an elastic coefficient, it is able to make a stress against such a strain small, and therefore, the thermal strain can be relieved.

In order to prevent the thermal stress generated with such a rise of the temperature from occurring, it would be possible to previously provide a clearance corresponding to the thermal expansion between a member made of a conventional C/C composite material and other structural material such as graphite, alumina, zirconia and SiC. However, the larger the temperature between room temperature and a furnace-operating temperature, the larger the clearance at the time of room temperature is. Therefore, not only assembling precision becomes worse, but a gas or heat is easy to flow out the structural material. Also, in an environment where a vapor of silicon or a metal is generated, there may be the case where the conventional C/C composite material and the structural member made of other material are bonded to each other, whereby a state substantially free from a clearance is produced. Therefore, even when a clearance is provided, it is difficult to prevent the generation of a thermal stress. In the C/C composite material according to an embodiment of the invention, since the elastic modulus is small, a clearance may not be provided. Therefore, the foregoing problem regarding the assembling precision is hardly caused, and even when bonded to other structural member, it is possible to minimize the generation of a thermal stress.

In the present embodiment, a cylindrical part is constituted, and in a section orthogonal to an axis of the cylindrical part, the carbon fibers are oriented along the inner surface thereof. Then, the C/C composite material is used by joining a graphite-made flange part (not shown) to or bringing it into contact with an end of this cylindrical part. In this cylindrical part, since short fibers of carbon fiber are oriented along the inner surface, the fibers are hardly disentangled, and even when subjected to cutting processing, a smooth surface can be formed. Furthermore, since the carbon fibers are oriented along the inner surface, continuous pores along the fibers from the surface are hardly formed. For that reason, in the case of using for a silicon single crystal pull-up apparatus or the like, even when pull-up is performed in a reactive gas atmosphere of SiO, Si or the like, it is possible to make it difficult to permeate the reactive gas into the inside of the composite material.

In consequence, in the silicon single crystal pull-up apparatus, even when used in a reactive gas, for example, SiO, Si or the like, it is possible to provide a C/C composite material molded body with a long life, in which a gas hardly permeates into the inside of the C/C composite material. Also, since the thin piece bodies are randomly laminated and formed, a smooth surface can be formed, and a substance with high wettability, such as silicon, is hardly deposited.

In the C/C composite material according to an embodiment of the invention, the content of impurities can be decreased by using a halogen gas such as $Cl_2$ and $F_2$, or a halogen based gas such as $CF_4$ and thermally treating it at a high temperature. For that reason, a C/C composite material with a high purity can be obtained. For example, the C/C composite material of the invention can be suitably utilized for a silicon single crystal pull-up apparatus, an SiC single crystal manufacturing apparatus, a polycrystalline silicon manufacturing apparatus, an epitaxial manufacturing apparatus of silicon, a compound, SiC or the like, and so on.

The carbon fibers which are used for the C/C composite material of the present Embodiment 1 are not particularly limited. Any of a PAN based or pitch based carbon fiber can be used. Above all, since the PAN based carbon fiber is low in elasticity among carbon fibers, it hardly stores therein a thermal stress or an internal stress by reaction conversion even in the case where the surface partially reacts with SiC or the like to deposit a reaction product. For that reason, it is possible to prevent breakage due to reaction conversion of the C/C composite material from occurring, and this C/C composite material can be suitably utilized.

Though this C/C composite material is preferably manufactured by adopting a sheet-forming method, it may also be manufactured by any method so far as it is possible to obtain a C/C composite material using short fibers.

In the present embodiment, the C/C composite material can be formed by adopting a sheet-forming method.

The formation of the C/C composite material is hereunder described in detail centering on the formation of a preform.

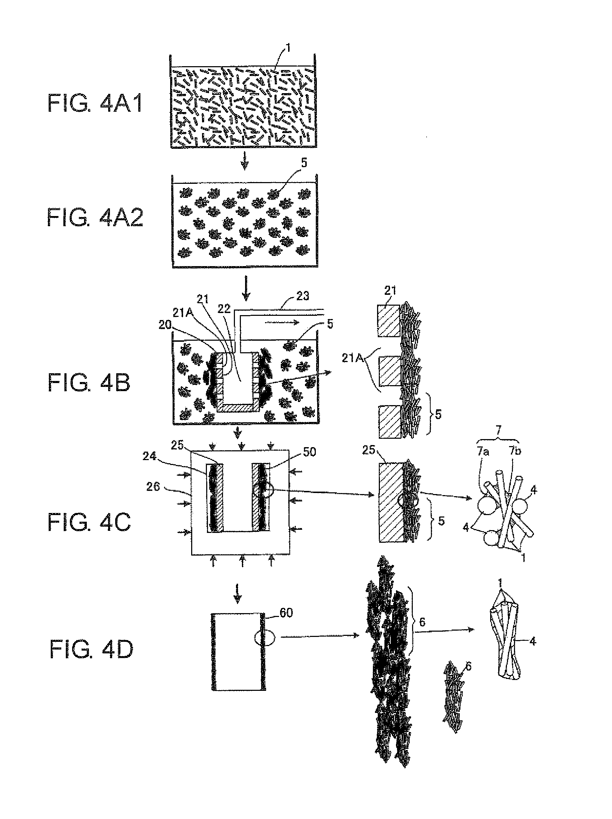

Outline views of the manufacturing method of a molded body of Embodiment 1 are shown in Figs. 4A1 to 4D. In these figures, the carbon fibers 1 are configured as a linear fiber. As described later, the C/C composite material molded body according to an embodiment of the present invention is formed by aggregating carbon fibers and a binder in a liquid to form flocks and laminating (sheet-forming) the flocks. The flock as referred to herein means an aggregate of carbon fibers and a binder in which the randomly oriented carbon fibers and the binder are uniformly dispersed and is a base of the thin piece body in the C/C composite material molded body. In view of the fact that the carbon fibers 1 are configured as a linear fiber, in filtering the flocks using a die in a laminating step of flocks (at the time of sheet-forming) as described layer, the carbon fibers pierce the flocks of a lower layer, which is already formed on the surface of the die, and get tangled, and therefore, a joining strength in a vertical direction (thickness direction) to the surface direction of the molded body is easily obtainable. The "linear fiber" as referred to herein means a fiber which does not substantially have a bending part and is preferably an acicular fiber. In the case of using carbon fibers which hardly become a linear fiber, such as carbon fibers having a long fiber length and soft carbon fibers, such a carbon fiber hardly pierces the already formed thin piece body, the longitudinal direction of almost all of the fibers is oriented along the surface direction, and the carbon fibers hardly get tangled with each other. Therefore, the joining strength in the thickness direction is hardly obtainable.

It is desirable that the molded body according to an embodiment of the present invention contains a carbon fiber component connecting the thin piece bodies adjoining in the laminating direction of the thin piece body (thickness direction of the molded body) to each other. Also, it is desirable that an orienting component in the thickness direction of the carbon fibers 1 is continuously present in the thickness direction of the molded body. As described above, flocks containing a linear fiber are laminated in such a manner that the linear carbon fiber pierces the already formed flock, and hence, the orienting component in the thickness direction is also continuously formed at a boundary between the flocks. According to this, a hardly separable C/C composite material molded body which does not have an interface in a vertical direction to the thickness direction of the molded body can be obtained.

An average fiber length of the carbon fibers is desirably less than 1.0 mm. When the average fiber length of the carbon fibers is 1.0 mm or more, fiber get tangled together and repel each other at the time of sheet-forming, so that a sheet-formed body with a high bulk density is hardly obtainable. In the case where the bulk density of a laminate of flocks is low, when compression molding is performed using an autoclave or the like, the larger a difference in the bulk density before and after the compression, the higher a compressibility is, a wrinkle is generated in a compression process, and in particular, a corner part is easily lined with wrinkles, and a defect increases. When such a defect increases, a portion with low strength is generated in the corner part. When the average fiber length of the carbon fibers is less than 1.0 mm, a void of the sheet-formed body is easily filled, and the carbon fibers become linear. Therefore, a sheet-formed body with a higher bulk density can be obtained, and hence, the compressibility can be made low in undergoing compression molding using an autoclave. According to this, the generation of a wrinkle in the corner part or the like can be suppressed, whereby a C/C composite material molded body with a less defect can be obtained.

Furthermore, when the average fiber length of the carbon fibers is 1.0 mm or more, the carbon fibers are easily bent, and the longitudinal direction of the carbon fibers is oriented in the surface direction of the C/C composite material molded body at the time of sheet-forming. For that reason, tangling among fibers in the thickness direction is few, and separation is easy to occur. On the other hand, when the average fiber length of the carbon fibers is less than 1.0 mm, the carbon fibers are easy to become a linear fiber and easy to pierce the already formed flock of a lower layer at the time of sheet-forming, and the joining strength in the thickness direction of the molded body is easily obtainable. Further, when the average fiber length of the carbon fibers is 1.0 mm or more, the fibers oriented in the vertical direction to the die is easy to break at the time of pressure molding in addition to that the orienting component in the vertical direction to the die surface at the time of sheet-forming is few. Therefore, the interlaminar strength is hardly obtainable and the interlaminar separation easily occurs.

The average fiber length of the carbon fibers is desirably in the range of 0.05 mm or more and less than 0.5 mm. When the average fiber length of the carbon fibers is less than 0.5 mm, not only the strength in the thickness direction of the carbon fiber-reinforced carbon composite material molded body can be more increased, but since short fibers are easily filled in a high density, the density especially at the time of laminating flocks can be increased, and the compressibility at the time of molding can be increased. When the average fiber length of the carbon fibers is less than 0.05 mm, an effect of the carbon fibers reinforcing the matrix is lost, and the fibers lose the property of the fibers, whereby there is a concern that a molded body with high strength is not obtainable.

An average fiber diameter of the carbon fibers is preferably from 1 to 20 $\mu$m. Also, an aspect ratio of the carbon fibers is preferably from 10 to 1,000. When the average fiber diameter and the aspect ratio of the carbon fibers fall within the foregoing ranges, respectively, the fiber diameter can be made sufficiently thin relative to the fiber length, and the fibers are hardly drawn out from the matrix, and hence, high strength is obtainable.

As the carbon fibers, any of a pitch based carbon fiber or a PAN based carbon fiber can be suitably used. In particular, the PAN based carbon fiber is preferably used as having lower elastic modulus compared with that of the pitch based carbon fiber. Since the PAN based carbon fiber is low in elastic modulus as compared with the pitch based carbon fiber, it can be suitably used for applications requiring flexibility, for example, a crucible for single crystal pull-up apparatus, a heat insulating cylinder, a crucible receptacle, a heater, etc.

The C/C composite material according to an embodiment of the present invention preferably has a bulk density of 1.2 g/cm$^3$ or more. When the bulk density of the molded body is 1.2 g/cm$^3$ or more, since a void of the C/C composite material is few, joining among the carbon fibers by the matrix becomes dense, and the carbon fibers hardly leave. For that reason, a dense C/C composite material molded body with higher strength can be obtained. Further, the C/C composite material according to an embodiment of the present invention preferably has a bulk density of 1.8 g/cm$^3$ or less. When the bulk density of the molded body exceeds 1.8 g/cm$^3$, a gas generated at the time of calcination after molding is hardly removed, whereby expansion or interlaminar separation is likely to occur.

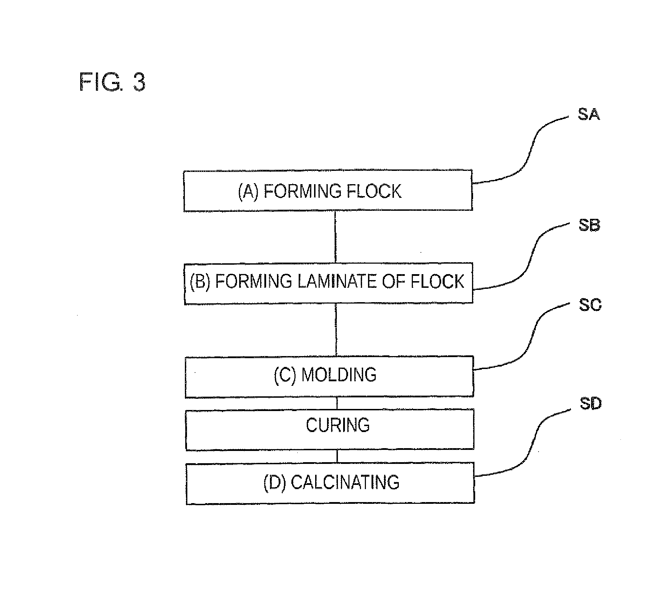

The manufacturing method of the C/C composite material molded body according to an embodiment of the present invention is hereunder described. Fig. 3 is a flow chart of manufacturing steps of the molded body according to an embodiment of the present invention; and Figs. 4A1 to 4D are outline views showing a manufacturing method of the molded body.

1. Step (A): Flock forming step SA

First of all, as shown in Fig. 3 and Figs. 4A1 to 4A2, the carbon fibers 1 and a binder that is a precursor component of a carbonaceous matrix are suspended in a liquid to spread the carbon fibers into bare fibers, and thereafter, an aggregating agent is added to aggregate the carbon fibers 1 and the binder, thereby forming flocks 5. As shown in Fig. 4A1, the carbon fibers 1 are first dispersed in a liquid to form a slurry, and as shown in Fig. 4A2, the slurry is then aggregated with a lapse of time, thereby forming the flocks 5. Herein, the fiber spreading as referred to means disentangling the bundle of carbon fibers into respective fibers. Generally, carbon fibers are bundled into several hundreds to several thousands of fibers with a sizing material being coated to form a strand. In the step of spreading fibers, each fiber is disentangled from the bundle of fibers.

2. Step (B): Step SB of forming a laminate of flocks

Subsequently, as shown in of Fig. 3 and Fig. 4B, the liquid having the flocks 5 formed therein is filtered by the die 20 having the porous die face 21. The porous die face 21 has a large number of openings 21 A on a side surface thereof. According to this, the flocks 5 are laminated on the surface of the porous die face 21, thereby forming a laminate 50 of flocks (perform, a first molded body).

Different from a conventional technique of direct filtration (sheet-forming) of a slurry having carbon fibers suspended therein, the manufacturing method according to an embodiment of the present invention is characterized in that the carbon fibers are once aggregated together with the binder to form flocks, which are then filtered (formed). According to this, even when lamination of the flocks 5 onto the porous die face 21 proceeds, the liquid is able to permeate between the flocks 5, and therefore, the thick laminate 50 of flocks which hardly blocks the permeation of the liquid is easily obtainable. Also, as shown an enlarged view of Fig. 4C, even in the case of making the average fiber length of the carbon fibers 1 smaller than the openings 21A of the porous die face 21 for the purpose of making the passing resistance of water small, the flocks 5 can be formed larger than the opening 21A. In consequence, the laminate 50 of flocks (perform) can be formed without allowing the carbon fibers 1 to pass through the opening 2 1 A at the time of filtration.

3. Step (C): Step SC of molding a laminate of thin piece body precursor (second molded body)

Subsequently, as Step (C), as shown Fig. 3 and Fig. 4C, the laminate 50 of flocks (perform) is integrally pressurized. The "integrally" as referred to herein means molding is performed without laminating a plurality of molded body. According to this, the longitudinal direction of the carbon fibers 1 is oriented in parallel to the surface direction of the porous die face 21. Then, the flocks 5 are converted into a thin piece, thereby forming a thin piece body precursor 6 as shown in Fig. 4D. In this way, a laminate 6 of thin piece body precursor (pressured molded perform) is formed.

4. Step (D): Calcination step SD

Then, as Step (D), as shown in Fig. 3 and Fig. 4D, the laminate 60 of thin piece body precursor is calcined. According to this, a binder 4 is carbonized to form the carbonaceous matrix 2 as shown in Fig. 1D, whereby the laminate 6 of thin piece body precursor becomes the thin piece body 3. In this way, a laminate of the thin piece bodies 3, namely the C/C composite material molded body 100 according to an embodiment of the present invention, is obtained.

Next, each of the steps is hereunder described in more detail.

[Regulation of carbon fiber]

It is preferable that the carbon fibers are regulated so as to agree with the molded body according to an embodiment of the present invention. On the surface of a carbon fiber for a carbon fiber-reinforced plastic (hereinafter also referred to as "CFRP") which is used for generally widely circulated fishing rods or aircraft parts or the like, a coating film of a sizing agent or the like is formed, and therefore, such a carbon fiber is hardly dispersed in water at the time of sheet-forming. For that reason, a carbon fiber which is free from a coating film of a sizing agent or the like is chosen, or the sizing agent or the like is removed by thermally treating such a carbon fiber in a reducing atmosphere using a hydrocarbon gas generated from an organic material, hydrogen or carbon monoxide gas. Other than the reducing atmosphere, inert gas atmosphere using a nitrogen gas, a noble gas or the like can be also used. Incidentally, scraps generated in a process of manufacture of CFRP may also be used. Such a coating film can be removed by means of thermal treatment at 500 °C or higher. Subsequently, it is preferable that the carbon fiber is regulated so as to have an average fiber length of less than 1.0 mm. When the average fiber length of the carbon fiber is less than 1.0 mm, as described above, the bulk density can be increased at the stage of a laminate of flocks (sheet-formed body); the generation of a wrinkle at the time of molding can be suppressed; the generation of a portion having weak strength can be suppressed; joining strength in the thickness direction of the molded body is obtainable; and a hardly separable molded body with high strength is obtainable. The carbon fiber having an average fiber length of less than 1.0 mm can be obtained by pulverizing commercially available carbon fibers or scraps of cloths, strands or the like generated in a process of manufacture of CFRP. By pulverizing scraps of cloths, strands or the like of carbon fibers, a raw material of carbon fiber having an average fiber length of less than 1.0 mm, which does not leave traces of cloths, strands or the like and which is easily utilized in the invention, can be obtained. Incidentally, pulverization can be achieved by means of dispersion in water and uniform pulverization using a mixer.

[Flock forming step (A)]

For forming flocks, it is desirable to use water as the liquid. This is because a large amount of the liquid is used, and therefore, not only water can be safely used as compared with organic solvents, but the treatment of a waste liquid is easy.

As the binder including a precursor component of the carbonaceous matrix (hereinafter also referred to as a "first binder"), any material is useful so far as it is insoluble in the foregoing liquid in which the carbon fibers are suspended and is carbonized. In view of avoiding formation of voids in the inside of the C/C composite material, the first binder is preferably powdery and preferably has a particle diameter of from 3 to 100 $\mu$m. As the first binder, for example, at least one selected from thermosetting resins such as phenol resins, furan resins and imide resins can be suitably utilized. As the phenol resin, for example, Bell Pearl (registered trademark), manufactured by Air Water Inc. can be suitably utilized. Bell Pearl is a powdery phenol resin, and a hydrophobic coating film is formed on the surface thereof. Thus, Bell Pearl keeps the powdery state without being dissolved even in water, so that it is able to aggregate together with the carbon fibers.

An addition amount of the first binder is preferably from 50 to 200 parts by weight based on 100 parts by weight of the carbon fiber. When the addition amount of the first binder is less than 50 parts by weight, the amount of carbonaceous matrix is smaller and the strength of the molded body is lowered. When it exceeds 200 parts by weight, a gas generated during the manufacturing process of a C/C composite material causes an expansion of interlaminar separation in the C/C composite material.

As the aggregating agent which is used in an embodiment of the present invention, any material is useful so far as it is able to aggregate the carbon fibers and the binder while utilizing a change of electric charges. Preferably, a material capable of regulating a ζ-potential so as to fall about within ±10 mV is desirable. By lowering the ζ-potential, the repulsive force between the binder particles and the carbon fibers can be reduced, so that the aggregation easily occurs. For example, an inorganic aggregating agent material, an organic polymer aggregating agent and the like can be utilized. Specifically, Percol 292 (registered trademark, manufactured by Allied Colloid Company) that is an organic polymer aggregating agent and the like can be suitably utilized. When the flock is formed, the state of a slurry colored black with the carbon fibers changes into a state of a mixed liquid in which the black flock floats in a transparent liquid. The organic polymer aggregating agent can be preferably used in view of the fact that it has a large molecular weight, has a crosslinking action and is able to obtain a large flock.

An addition amount of the aggregating agent is preferably from 0.01 to 5 parts by weight based on 100 parts by weight of the carbon fibers and more preferably 0.5 to 1 parts by weight based on 100 parts by weight of the carbon fibers. When the addition amount of the aggregating agent falls within the foregoing range, a favorable flock which hardly collapses can be formed.

Also, although a size of the opening of the porous die face is not particularly limited, it is preferably from 0.5 to 10 mm, and more preferably from 1 to 3 mm. When the size of the opening of the porous die face is less than 0.5 mm, the carbon fibers are easy to cause clogging, whereby there is a concern that the passing resistance of water becomes large. When the size of the opening of the porous die face exceeds 10 mm, since a suction force obtained by multiply an opening area by a negative pressure is generated in the opening, there may be the case where even a flock having such a size that it does not originally pass is sucked and allowed to pass. The size of the flock is required to be equal to or more than the size of the opening of the porous die face used for filtration. Since the size of the flock has a distribution, when a flock having a large diameter is trapped by the die face, deposition of flocks on the porous die face starts. When an average diameter of the flock is largely lower than the size of the opening of the porous die face, the majority of flocks pass through the die face, so that the flocks cannot deposit on the die face. The average diameter of the flock in the mixed liquid is preferably from 0.5 to 10 mm, and more preferably from 1 to 5 mm. The size of the flock can be regulated by an amount of the aggregating agent, a type of the aggregating agent, aggregation time or strength of stirring.

It is preferable that a second binder is further added in the liquid for forming a flock. Since the foregoing first binder component is powdery at a sheet-forming stage, it is not able to keep the shape of the laminate of flocks (sheet-formed body). The second binder is a component which is added for the purpose of keeping the shape of the laminate of flocks (sheet-formed body) to be obtained subsequently until a subsequent calcination step. As the second binder, any material may be used so far as it is able to keep the shape of the laminate of flocks. Any material having an action to physically couple the carbon fibers and the first binder, and also the carbon fibers each other at a stage of forming the laminate of flocks may be used, and examples thereof include viscous liquids and organic fibers. As the viscous liquid, starch, latexes and the like can be suitably utilized. When the latex is mixed with water, it becomes cloudy to form a suspension. A droplet of the finely dispersed latex has an action to couple the carbon fibers with the first binder by an adhesive action. As the organic fiber, pulp or the like can be suitably utilized. The pulp has a good affinity with water and tangles with the carbon fibers to reveal an action to couple the carbon fibers with the first binder. In the case where a viscous liquid is used as the second binder, for example, as shown in Fig. 4C, in view of the fact that a second binder 7a intervenes between the carbon fiber 1 and the first binder 4, and a second binder 7b intervenes between the carbon fibers 1, the shape of the laminate 50 of flocks is kept.

Incidentally, in forming the flocks, the addition order of the foregoing carbon fibers, first binder, aggregating agent and second binder is not particularly limited, and they may be added in the liquid simultaneously or successively. However, from the viewpoint of forming the flocks uniformly and stably, it is preferable to undergo the preparation in the following order.

(a) The carbon fibers are added in water and dispersed with stirring. When stirring is too strong, bubbles are formed, and hence, such is not preferable. As stirring means, a propeller type, a paddle type or the like can be used. A stirring time of the carbon fibers is preferably about 3 minutes.

(b) Subsequently, the first binder is added, and stirring is continued until the first binder is dispersed. A stirring time is preferably from 0.5 to 5 minutes.

(c) Subsequently, the second binder is added, and stirring is continued until the second binder is dispersed. A stirring time is preferably from 0.5 to 5 minutes.

(d) Finally, the aggregating agent is added. When stirring is few, the aggregating agent is not mixed, whereas when stirring is excessive, the formed flocks are broken. A stirring time is regulated while confirming a degree of formation of flocks. The stirring time is preferably from 20 to 30 seconds.

[Forming step (B) of laminate of flocks]

The die 20 is dipped in the liquid containing the thus formed flocks 5. As shown in Fig. 4B, the die 20 is provided with the porous die face 21 having a cylindrical shape and a vacuum chamber 22. The porous die face 21 is provided with the openings 21A. The vacuum chamber 22 is connected to a suction pump (not shown) by a conduit 23. In consequence, when the suction pump is actuated, air within the vacuum chamber 22 is discharged, thereby presenting a vacuum state. Then, the flocks 5 are suctioned on the side of the die 20. Since the size of the flock 5 is larger than the size of the opening 21A, the flocks 5 do not pass through the openings 21 A but are laminated as a continuous layer on the surface of the porous dye surface 21 in the surface direction of the porous die face. On that occasion, the flocks 5 are laminated such that carbon fibers pierce the already formed laminate. The laminated flocks 5 become slightly flat from a spherical shape due to an influence of the suction force, and the longitudinal direction of the carbon fibers 1 within the flocks is oriented in parallel to the surface direction of the porous die face 21. On the other hand, the liquid passes through the openings 21A and is discharged out through the conduit. In this way, the laminate 50 of flocks (perform, first molded body) can be formed.

As the porous die face 21, any material having plural openings through which the liquid is able to pass is useful, and examples thereof include nets, punching metals, woven fabrics and nonwoven fabrics. When using water as the liquid, the openings of the porous die face preferably has a diameter of about 1 to 3 mm which water can easily pass through.

Incidentally, although the shape of the die is described later, a plane and/or a combination of plural planes, a three-dimensional curved surface and/or a combination of curved surfaces, a cylinder having a flange, a cone, a bottomed body, a circular cylinder and so on can be properly chosen.

Also, at the time of suction filtration, any material may be used for undergoing the pressure reduction. In addition to air, other liquid can be suctioned together, and hence, a self-suction type centrifugal pump, an aspirator or the like can be suitably utilized.

Incidentally, as a method of filtration, in addition to the foregoing suction filtration, pressure filtration, centrifugal filtration or other method may be adopted. The pressure filtration is, for example, a method in which the outer surface side of the porous die face is pressurized by a pressurized gas to laminate flocks on the outer surface of the porous die face, thereby forming a laminate of flocks. The centrifugal filtration is, for example, a method in which a flock-containing mixed liquid is supplied into the inside of a die of a rotary body having a porous die face placed on the inner surface thereof, the rotary body is rotated to laminate flocks on the inner surface of the porous die face, thereby forming a laminate of flocks.

[Drying step]

Subsequently, in order to remove water remaining in the laminate of flocks obtained in the preceding step, it is preferable to dry the laminate together with the die. Drying is preferably performed at 40 °C or higher for the purpose of removing water. Also, in order to prevent melting and curing of the first binder, it is preferable to perform drying at a temperature of not higher than a melting temperature of the first binder. For example, in the case of using Bell Pearl (registered trademark) as the first binder, taking into consideration the fact that the hydrophobic coating film is melted at about 70 °C, drying is performed at not higher than 60 °C while ventilating air, whereby water can be easily removed.

[Pressurizing step] (Molding step (C))

In the case where the molded body has a plane or a shape close to a plane, a pressurizing method by means of uniaxial molding can be utilized as a molding method. However, this method can be utilized only for a limited structure in which an upper die and a lower die are constituted on the both sides of a cavity. Therefore, when the molded body has a three-dimensional shape, as shown in Fig. 4C, it is preferably that the laminate 50 of flocks is covered by a sealing film 24 and molded by applying heat and pressure using an autoclave 26. First all, air within the sealing film 24 is suctioned to draw a vacuum, and a pressure is then applied. A molding pressure is not limited but preferably 1 MPa or more. When the molding pressure is 1 MPa or more, it is possible prevent expansion of the sheet-formed body pressurized by a gas generated in curing reaction of a thermosetting resin. At that time, it is preferable to undergo molding while supporting the both sides (inner side or outer side) of the die 20 of the laminate 50 of flocks by a support material 25. Since there is a concern that the laminate of flocks is softened and deformed by heating, when the laminate is supported by the support material 25, deformation can be prevented from occurring. Different from that of the die 20 used in the forming step (B) of the laminate of flocks, the support material 25 as used herein is one not having a porous die face but having a smooth surface. The molding is performed integrally without laminating laminates (without joining laminates) regardless of the uniaxial molding or the molding using autoclave. Although the laminate itself hardly causes an interlaminar separation, if the molding is performed by laminating, an interlaminar separation tends to occur since fibers hardly couple adjoining laminates once the molded body is dried.

[Curing step]

Since the first binder is a thermosetting resin, it is preferable that after sufficiently increasing the pressure in the foregoing pressure molding step, the molded body is heated, thereby melting and curing the thermosetting resin contained in the flocks. According to this, the shape can be fixed in such a manner that the laminate 60 of a thin piece body precursor (second molded body) is not deformed. It is necessary to increase a curing temperature to the curing temperature of the thermosetting resin or higher. For example, in general, curing can be performed at from 150 °C to 200 °C. When the curing temperature is 150 °C or higher, the curing of the thermosetting resin sufficiently proceeds. When the curing temperature is 200 °C or lower, foam due to gas generated at the curing of the thermosetting resin can be prevented. In the case where the foregoing molding step is performed in an autoclave or other cases, so far as heating can be sufficiently performed in the molding step, the curing step can also be performed simultaneously with the molding step.

[Degreasing step]

In order to volatilize an organic component in the inside of the laminate 60 of a thin piece body precursor (second molded body), it is preferable to perform degreasing prior to the calcination step. By way of this degreasing step, the first binder is carbonized, and the majority of the second binder is separated and vaporized. For that reason, the carbide derived from the first binder component is a material having a coupling action after the degreasing step. Any degree of temperature is adaptable for a temperature of the degreasing. In the case where pitch impregnation and resin impregnation are performed after the degreasing step, it is preferable to form pores, and hence, it is preferable to perform the degreasing at 500 °C or higher. When the temperature is 500 °C or higher, carbonization of the resin sufficiently proceeds, and pores having a sufficiently large size such that the resin or pitch is impregnated therein in the subsequent impregnation step can be formed. Although an upper limit of the degreasing temperature is not particularly limited so far as it is not higher than a temperature of the subsequent calcination temperature. However, the degreasing temperature is preferably 1,000 °C or lower. By the temperature of 1,000 °C, the majority of degreasing can be completed, so that pores to be impregnated is sufficiently formed. In order to prevent oxidation of the carbon fibers or binder from occurring, it is preferable to perform the degreasing in a reducing atmosphere. In addition to the reducing atmosphere using a hydrocarbon gas generated from an organic material or hydrogen, an inert gas atmosphere using a nitrogen gas, a noble gas or the like can also be applied.

[Impregnation step]

It is preferable to impregnate a resin, a pitch or the like in the inside of the pores of the laminate of a thin piece body precursor after the degreasing, thereby realizing a high density. The laminate of a thin piece body precursor after the degreasing is placed in the autoclave, and after drawing a vacuum, a liquid resin or pitch is introduced into the autoclave and dipped, followed by applying a pressure. The liquid resin may be a solution of the resin in water or an organic solvent, or may be a melted material obtained by applying heat. In the case of a solution, even when the use is repeated, polymerization hardly proceeds, so that the solution can be stably used. In the case of a pitch, the pitch is used after being converted into a liquid upon heating the autoclave at a melting point or higher.

After completion of the impregnation, similar to the foregoing degreasing step, degreasing is performed, whereby a molded body with a higher density can be obtained.

[Calcination step (D)]

By further applying heat to the laminate of a thin piece body precursor to perform calcination, the first binder is thoroughly carbonized, thereby forming a carbonaceous matrix. According to this, the thin piece body precursor becomes a thin piece body, whereby the C/C composite material molded body 100 according to an embodiment of the present invention which is constituted of a laminate of thin piece bodies can be obtained.

In the calcination step, the support material thermally expands with an increase of the temperature, and the laminate 60 of a thin piece body precursor (press molded perform, second molded body) thermally shrinks. In order to avoid a stress to be caused due to a difference in thermal expansion generated in the calcination step, it is preferable that the support material 25 is removed from the laminate 60 of a thin piece body precursor and heated in a non-oxidizing atmosphere such as a reducing atmosphere or an inert atmosphere. A reducing atmosphere using a hydrocarbon gas generated from an organic material, hydrogen or carbon monoxide gas or an inert gas atmosphere using a nitrogen gas, a noble gas or the like can be used. A desired temperature of the calcination step is from 1,500 to 2,800 °C. When the calcination temperature is 1,500 °C or higher, a functional group in the C/C composite material, such as hydrogen, can be sufficiently removed. When a functional group such as hydrogen remains, a hydrocarbon gas or the like is generated at the time of using the C/C composite material molded body. When a molded body which is not calcined at a calcination temperature of 1,500 °C or higher is used in a semiconductor manufacturing apparatus or the like, there is a concern that such a hydrocarbon gas is incorporated into a semiconductor, thereby lowering the purity. When the calcination temperature is not higher than 2,800 °C, the progress of crystallization of the C/C composite material can be suppressed, and the strength can be kept. A more desired range of the calcination temperature is from 1,800 to 2,500 °C. It is preferable that the calcination is performed at a heating rate of about 500 °C/hour.

According to an embodiment of the present invention, by forming the shape of the porous die face 21 into a shape along the shape of the desired molded body, molded bodies having various three-dimensional shapes in addition to the foregoing shape can be manufactured by means of integral molding. Additionally, it is possible to uniformly disperse carbon fibers, so that a structurally weak part cannot be formed even at a joining part of surfaces.

Incidentally, in order to increase the density of the C/C composite material, the impregnation step and the degreasing step may be repeated plural times prior to the calcination step.

Incidentally, it is desirable that the dried sheet-formed body obtained in the drying step after sheet-forming is heated at from 150 to 200 °C and pressured, and then kept for 5 minutes or more to achieve curing. Also, it is preferable that the molded body which has been cured in the curing step is heated at 500 °C or higher to carbonize the first binder component, thereby obtaining a degreased body, and furthermore, the degreased body is calcined at 1,500 °C or higher in the calcination step.

(Average fiber length and fiber volume fraction)

In the invention, an average fiber length <L> of the carbon fibers may be measured by any method. So far as the carbon fibers are at a stage of raw material, the average fiber length is obtainable by directly measuring a dispersed carbon fiber powder by a scanning electron microscope or the like. As to a calculation method, the average fiber length of the carbon fibers can be determined by measuring all lengths $L_i$ of the carbon fibers existent in an arbitrary region and dividing them by a number n of the carbon fibers as expressed by the following equation (thickness and density of the carbon fibers do not take part in the average fiber length).

$$<L> = \sum L_i / n$$

Also, an average fiber length of the carbon fibers in a state where they are contained in the C/C composite material may be measured by any method. Though it is not easy to extract only the carbon fibers solely, the average fiber length of the carbon fibers can be measured using a method by, for example, a focused ion/electron beam system (FB-SEM) or the like. Specifically, an individual fiber length can be determined by confirming a three-dimensional disposition of fibers by SEM while processing the C/C composite material step-by-step from the surface using a focused ion/electron beam or the like. Furthermore, a fiber volume fraction can be calculated by calculating an area occupied by the carbon fibers every time of processing.

Also, in addition to the direct analysis of the C/C composite material, the fiber volume fraction can be determined by dividing a volume of the carbon fibers calculated from a mass and a true density of the carbon fibers used at the manufacturing stage, by a mass and an apparent density (bulk density) of the C/C composite material.

(Embodiment 2)

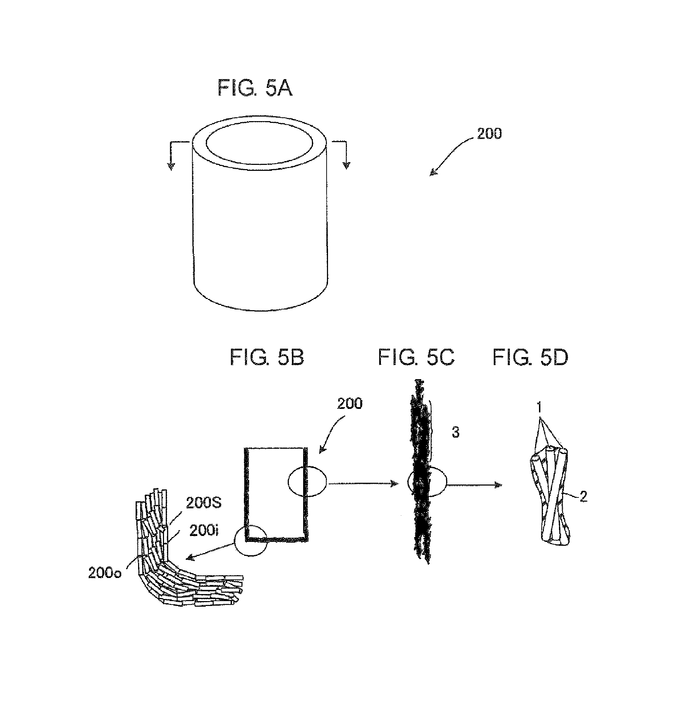

A molded body of Embodiment 2 of the present invention is described on the basis of Figs. 5A to 5D.

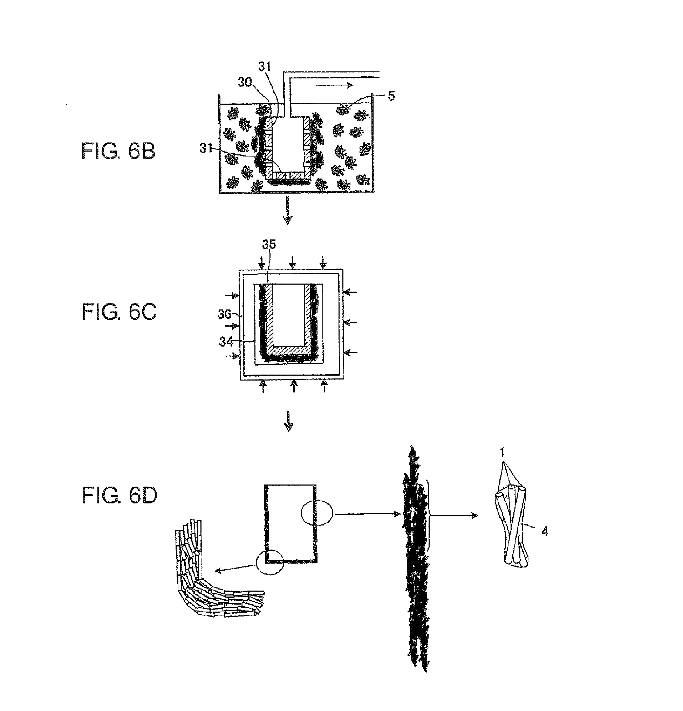

Figs. 5A to 5D are views showing the molded body of Embodiment 2, specifically, Fig. 5A is a perspective view; Fig. 5B is a sectional view; Fig. 5C is an enlarged view of a part of Fig. 5B; and Fig. 5D is a more enlarged view of a part of Fig. 5C. Also, Figs. 6B to 6D are outline views showing a manufacturing method of the molded body of Embodiment 2. A C/C composite material molded body 200 of Embodiment 2 is characterized by having a bottom surface and is the same as the molded body 100 of Embodiment 1, except for the matter that it has a bottom surface.

In order to manufacture the C/C composite material molded body 200 of Embodiment 2, as shown in Fig. 6B, the flocks 5 are filtered using a die 30 having a porous die face 31 on each of a side surface and a bottom surface thereof at the time of forming a laminate (preform) of flocks. Also, as shown in Fig. 6C, a support material 35 in a pressurizing step is made bottomed. Other points are the same as those in the manufacturing method of Embodiment 1. The flocks 5 are laminated along a curved surface direction of the porous die face 31. Then, as shown in Fig. 5B, the longitudinal direction of the carbon fibers 1 is oriented in a direction of a surface 200S of the molded body 200. According to this, in the resulting molded body 200, the thin piece bodies are also oriented along the surface 200S of the molded body 200 in a boundary region between the bottom surface and the side surface, and thus, the boundaries of the thin piece bodies are dispersed, thereby forming a uniform molded body.

In this C/C composite material molded body, the carbon fibers are present in a bare-fiber state within a carbonaceous matrix. Also, the carbon fibers are a linear fiber having an average fiber length of less than 1.0 mm, and the C/C composite material molded body has a fiber volume fraction of from 30 to 50 %. Further, the C/C composite material molded body has a bulk density of 1.2 g/cm$^3$ or more.

Also, in this C/C composite material molded body, it is preferable that a tensile strength of the C/C composite material molded body is 50 MPa or more, and an elastic modulus of the C/C composite material molded body is from 5 GPa to 15 GPa.

(Embodiment 3)

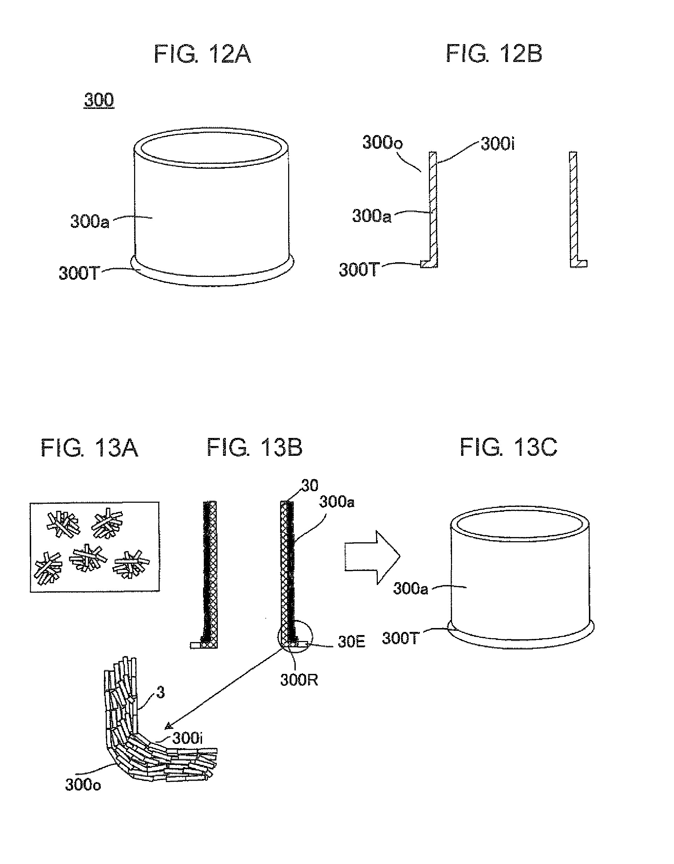

A molded body according to Embodiment 3 of the present invention is described on the basis of Figs. 12A to 13C. Fig. 12A is a perspective view of a C/C composite material molded body of Embodiment 3, and Fig. 12B is a sectional view thereof; and Figs. 13A to 13C are diagrammatic views showing manufacturing steps of the C/C composite material molded body of Embodiment 3.

A C/C composite material molded body 300 of Embodiment 3 is the same as the C/C composite material molded body 100 of Embodiment 1, except for the matter that a flange part 300T is provided in a lower end of a cylindrical part 300a. In this way, in view of the fact that the flange part 300T is provided, a curved surface constituting the cylindrical surface and a donut-shaped plane are integrally formed adjoiningly in a continuous manner. Here, the thin piece bodies 3 are also oriented along a surface 300S in a boundary region 300R between the curved surface constituting the cylindrical surface and the donut-shaped plane, thereby constituting a uniform continuous surface with high strength, and therefore, extremely high strength is revealed. Also, the boundaries of the thin piece bodies 3 are dispersed in this boundary region 300R, thereby forming a uniform molded body.

In manufacturing this C/C composite molded body 300, the same procedures as those in the foregoing Embodiment 1 are followed. However, a part of the surface of an end 30E of the die 30 is masked so as to not form the porous die face, thereby depositing no flock.

According to this configuration, as shown in Fig. 13B, flocks are filtered using the die 30 having the porous die face 31 on the side surface and the bottom surface thereof. The flocks are laminated as a continuous body along a curved surface direction of the porous die face 31. In this way, a thin piece body laminate configured by the cylindrical part 300a which is constituted of a first curved surface 300i along an outer wall of the die 30 and a second curved surface 300o opposing to this first curved surface 300i and which has the flange part 300T is formed, whereby a desired shape can be obtained.

Then, similar to the foregoing Embodiments 1 and 2, by way of the drying step, pressurizing step, degreasing step, impregnation step and calcination step, the C/C composite material molded body 300 composed of a cylinder having a flange part as shown in Figs. 12A and 12B can be obtained. In this C/C composite material molded body 300, the thin piece bodies are also oriented along the first and second surfaces 300i and 300o in a boundary part, namely a joint part between the flange part and the cylindrical part, and the boundaries of the thin piece bodies are dispersed, thereby forming a molded body having a uniform continuous composition.

In the C/C composite material molded body of Embodiment 3, the carbon fibers are present in a bare-fiber state within a carbonaceous matrix. Also, the carbon fibers are a linear fiber having an average fiber length of less than 1.0 mm, and the C/C composite material molded body has a fiber volume fraction of from 30 to 50 %. Further, the C/C composite material molded body has a bulk density of 1.2 g/cm$^3$ or more.

Also, in the C/C composite material molded body of Embodiment 3, it is preferable that a tensile strength of the C/C composite material molded body is 50 MPa or more, and an elastic modulus of the C/C composite material molded body is from 5 GPa to 15 GPa.

(Embodiment 4)

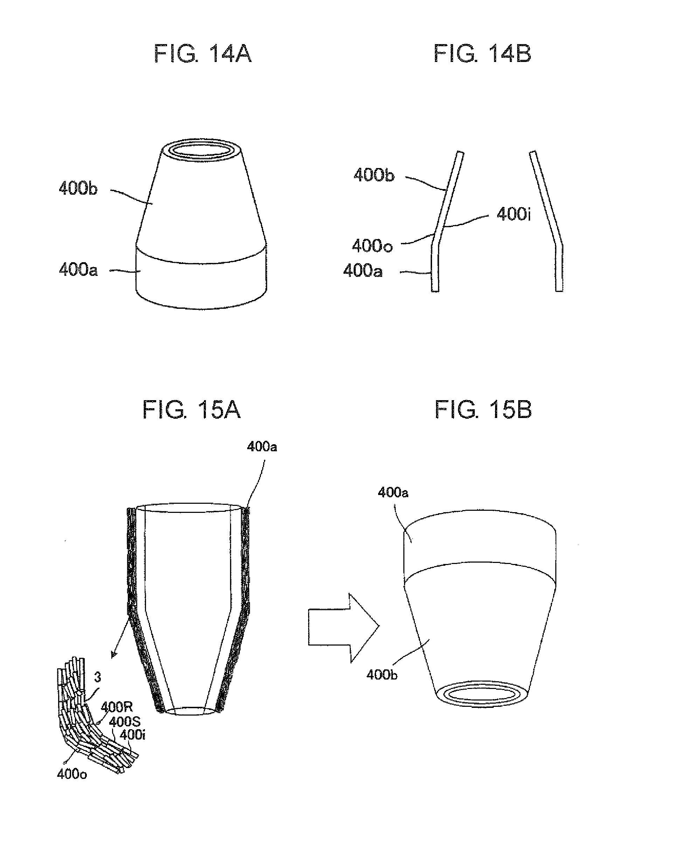

A molded body according to Embodiment 4 of the present invention is described on the basis of Figs. 14A to 15B. Fig. 14A is a perspective view of a C/C composite material molded body of Embodiment 4, and Fig. 14B is a sectional view thereof; and Figs. 15A and 15B are diagrammatic views showing manufacturing steps of the C/C composite material molded body of Embodiment 4.

A C/C composite material molded body 400 of Embodiment 4 is the same as the C/C composite material molded body 100 of Embodiment 1, except for that a truncated conical cylindrical part 400b is provided in a lower end of a cylindrical part 400a. In this way, in view of the fact that the truncated conical cylindrical part 400b is provided, a curved surface constituting the cylindrical surface and a curved surface constituting the truncated cylindrical part are integrally formed adjoiningly in a continuous manner. Here, the thin piece bodies 3 are also oriented along a surface 400S in a boundary region 400R between the curved surface constituting the cylindrical surface and the truncated conical cylindrical part, thereby constituting a uniform continuous body with high strength, and therefore, extremely high strength is revealed. Also, the boundaries of the thin piece bodies 3 are dispersed in this boundary region 400R, thereby forming a uniform molded body.

In manufacturing this C/C composite molded body 400 of Embodiment 4, the same procedures as those in the foregoing Embodiment 3 are followed, except for using a die 40 having an outer surface having a columnar shape and a conical shape.

According to this configuration, as shown in Fig. 15B, flocks are filtered using the die 40 having a porous die face 41 on the side surface thereof. The flocks are laminated as a continuous body in a curved surface direction of the porous die face 41. In this way, a thin piece body laminate composed of the cylindrical part 400a and the truncated conical cylindrical part 400b, which is constituted of a first curved surface 400i along an outer wall of the die 40 and a second curved surface 400o opposing to this first curved surface 400i, is formed, whereby a desired shape can be obtained.

Then, similar to the foregoing Embodiments 1,2 and 3, by way of the drying step, pressurizing step, degreasing step, impregnation step and calcination step, the C/C composite material molded body 400 composed of a cylinder having a flange part as shown in Figs. 14A and 14B can be obtained. In this C/C composite material molded body 400, the thin piece bodies are also oriented along the first and second surfaces 400i and 400o in a boundary part, namely a joint part between the cylindrical part 400a and the truncated conical cylindrical part 400b, and the boundaries of the thin piece bodies are dispersed, thereby forming a molded body having a continuously uniform composition in the surface 400S.

In the C/C composite material molded body of Embodiment 4, the carbon fibers are present in a bare-fiber state within a carbonaceous matrix. Also, the carbon fibers are a linear fiber having an average fiber length of less than 1.0 mm, and the C/C composite material molded body has a fiber volume fraction of from 30 to 50 %. Further, the C/C composite material molded body has a bulk density of 1.2 g/cm$^3$ or more.

Also, in the C/C composite material molded body of Embodiment 4, it is preferable that a tensile strength of the C/C composite material molded body is 50 MPa or more, and an elastic modulus of the C/C composite material molded body is from 5 GPa to 15 GPa.

(Embodiment 5)

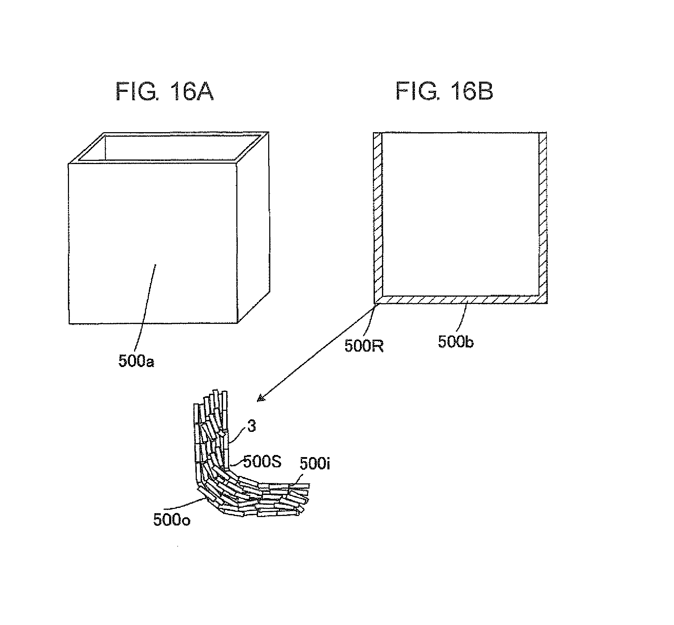

A molded body according to Embodiment 5 of the present invention is described on the basis of Figs. 16A and 16B. Figs. 16A and 16B are views showing a molded body of Embodiment 5, specifically, Fig. 16A is a perspective view, and Fig. 16B is a sectional view.

A C/C composite material molded body 500 of Embodiment 5 is configured by a rectangular cylindrical part 500a having a bottom part 500b. The C/C composite material molded body 500 of this embodiment is the same as the C/C composite material molded body 100 of Embodiment 1, except for the shape of the C/C composite material molded body. In this way, in the present Embodiment 5, four planes constituting the rectangular cylindrical surface and a bottom surface are positioned vertical to each other and integrally formed in a continuous manner. Here, in a boundary region 500R between the planes orthogonal to each other, the thin piece bodies 3 are also oriented along a surface 500S, thereby constituting a uniform continuous surface with high strength, and hence, extremely high strength is revealed. Also, in this boundary region 500R, boundaries of the thin piece bodies 3 are also dispersed, thereby forming a uniform molded body.

In the C/C composite material molded body of Embodiment 5, the carbon fibers are present in a bare-fiber state within a carbonaceous matrix. Also, the carbon fibers are a linear fiber having an average fiber length of less than 1.0 mm, and the C/C composite material molded body has a fiber volume fraction of from 30% to 50 %. Further, the C/C composite material molded body has a bulk density of 1.2 g/cm$^3$ or more.

Also, in the C/C composite material molded body of Embodiment 5 of the invention, it is preferable that a tensile strength of the C/C composite material molded body is 50 MPa or more, and an elastic modulus of the C/C composite material molded body is from 5 GPa to 15 GPa.

(Embodiment 6)

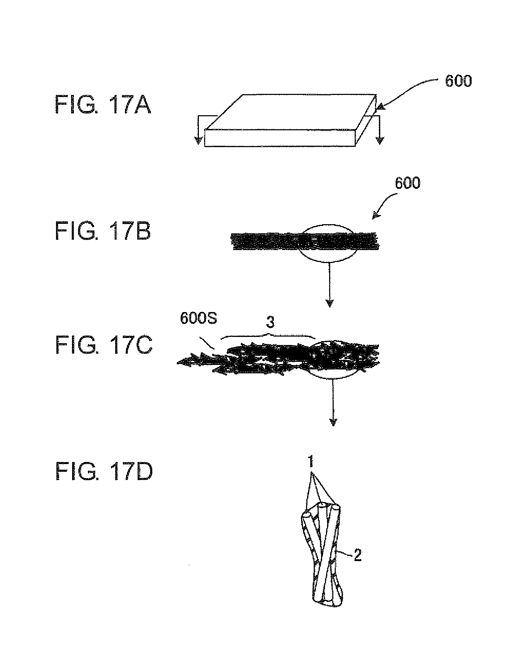

A molded body according to Embodiment 6 of the present invention is described on the basis of Figs. 17A to 18D. Fig. 17A is a perspective view of a molded body 600 of the present Embodiment 6 composed of a C/C composite material. Fig. 17B is a sectional view of Fig. 17A; Fig. 17C is an enlarged view of a part of Fig. 17B; and Fig. 17D is a more enlarged view of a part of Fig. 17C. The molded body 600 of Embodiment 6 is the same as the C/C composite material molded body 100 of Embodiment 1, except for that the shape is a plate-like shape.

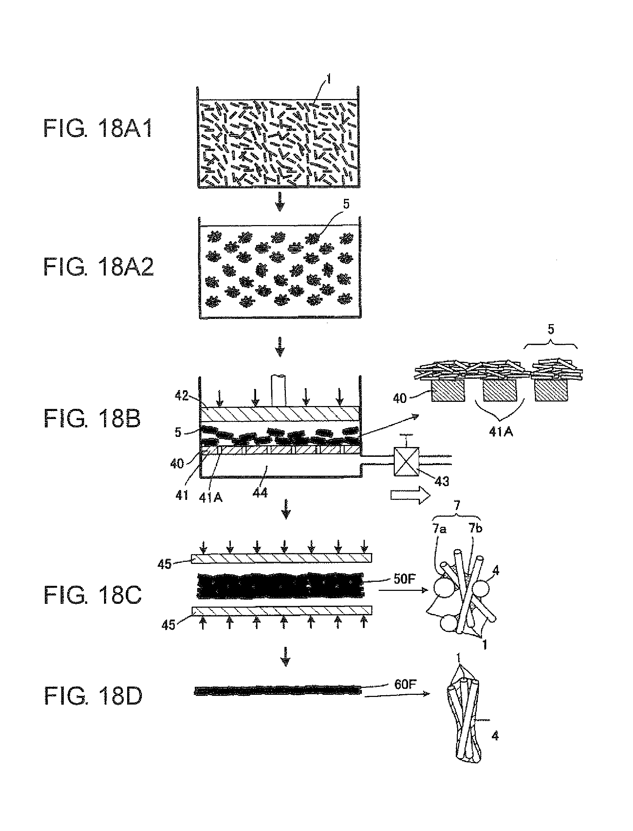

Figs. 18A1 to 18D are outline views showing a manufacturing method of a molded body of Embodiment 6. A manufacturing method of the molded body of Embodiment 6 is hereunder described in detail.

[Flock forming step (A)]

A step (A) of forming flocks can be performed in the same manner as that in the step (A) in Embodiment 1.

[Forming step (B) of laminate of flocks]

Subsequently, as a step (B) of forming a laminate of flocks, as shown in Fig. 18B, a liquid having the flocks 5 formed therein is filtered by the die 40 having the porous die face 41. The porous die face 41 has a large number of openings 41A on the upper surface thereof. When the liquid is pressurized from an upper surface thereof by a pressure plate 42, the liquid passes through the openings 41 A and is discharged out from a water storage chamber 44 via a valve 43. Since the size of the flock 5 is larger than the size of the opening 41A, the flocks 5 do not pass through the openings 41A but are laminated as a continuous layer on the surface of the porous dye surface 41 in the surface direction of the porous die face. On that occasion, the flocks 5 are laminated so as to pierce the already formed laminate. The laminated flocks 5 become slightly flat from a spherical shape due to an influence of the suction force, and the longitudinal direction of the carbon fibers 1 within the flocks is oriented in the surface direction of the porous die face 41. In this way, a laminate 50F of flocks (preform, i.e., a first molded body) is formed.

As the porous die face 41, any material having plural openings through which the liquid is able to pass is usable, and examples thereof include nets, punching metals. woven fabrics and nonwoven fabrics. In the case of using water as the liquid, a size of the opening is preferably from 1 to 3 mm in terms of a diameter at which water is easy to pass therethrough.

Also, the filtration may be performed by any method. For example, in the case of suction filtration, in addition to air, the liquid is also suctioned together, and hence, a self-suction type centrifugal pump, an aspirator or the like can be suitably utilized.

Incidentally, as a filtration method, in addition to the foregoing suction filtration, pressure filtration or a method of filtration by means of simple gravity may be adopted. The pressure filtration is, for example, a method in which the outer surface side of the porous die face is pressurized by a pressurized gas to laminate flocks on the outer surface of the porous die face, thereby forming a laminate of flocks.

[Pressurizing step] (Molding step (C))

Then, by integrally compressing the laminate 50F of flocks without being laminated, the longitudinal direction of the carbon fibers is oriented in a surface direction orthogonal to the laminating direction, thereby forming a molded body 60F. In the case where the molded body is in a plate-like shape, a pressurizing method by means of uniaxial molding can be utilized as a pressure molding method. As shown in Fig. 18C, the laminate 50 of flocks is interposed by press plate materials 45 and then pressurized. A molding pressure is preferably 1 MPa or more. When the molding pressure is 1 MPa or more, since the laminate of flocks can be sufficiently compressed, a C/C composite material with high density and high strength can be obtained. Although there is no particular upper limit of the molding pressure, since the first binder is softened by applying heat, when a pressure of 10 MPa is applied, a molded body with sufficiently high density and high strength can be obtained. According to this, the longitudinal direction of the carbon fibers 1 is oriented in parallel to the surface direction of the porous die face 41. Then, the flocks 5 are converted into a thin piece, thereby forming a thin piece body precursor. In this way, there is molded the laminate (press molded preform, i.e., a second molded body) of the thin piece body precursor.

With respect to the resulting molded body 60F of the thin piece body precursor, similar to Embodiment 1, a molded body 600 of Embodiment 6 is obtained by way of the curing step, degreasing step, impregnation step and calcination step (D).

Incidentally, the surface direction of the molded body as referred to herein means a principal surface constituting the molded body and means that an end surface is not included. A surface which after the calcination, is newly formed by means of polishing, boring or mechanical processing of the surface is not included. As described above, by taking a configuration in which the longitudinal direction of the carbon fibers is continuously oriented along the outer surface at the time of molding by the sheet-forming method, a C/C composite material molded body having extremely high mechanical strength and excellent heat resistance can be obtained.

[Examples]

The present invention is hereunder described in more detail with reference to the following Examples and Comparative Examples, but it should not be construed that the invention is limited to these Examples.

<Example 1>

(1) Carbon fiber preparation step

PAN based carbon fibers for CFRP having an average fiber diameter of 7 $\mu$m were prepared. Here, after a sizing agent coated on the fiber surface for the purpose of improving dispersibility into water was calcined in a reducing atmosphere at 550 °C and removed, the carbon fibers were dispersed in water and pulverized to an average fiber length of 150 $\mu$m using a mixer, followed by dehydration and drying. Then, the resulting carbon fibers were heated together with an organic material powder capable of generating a large amount of a hydrocarbon gas in a sealed vessel, and the inside of the sealed vessel was purged with a hydrocarbon gas generated from the organic material, thereby forming a reducing atmosphere.

(2) Flock forming step

(a) The carbon fibers obtained in the preceding carbon fiber preparation step were thrown into water and dispersed while stirring. Stirring was performed for about 3 minutes.

(b) Subsequently, a phenol resin ("Bell Pearl" (registered trademark) S890, manufactured by Air Water Inc.) (200 parts by mass) was added as a first binder to 100 parts by mass of the carbon fibers, and the mixture was similarly stirred for one minute.

(c) Subsequently, a latex (5 parts by mass) was added as a second binder, and the mixture was similarly stirred for one minute.

(d) Furthermore, a cationic aggregating agent ("Percol" (registered trademark) 292, manufactured by Allied Colloid Company) (0.3 parts by mass) was added as an aggregating agent, and the mixture was stirred for 20 seconds, thereby forming flocks.

(3) Flock laminate forming step (sheet-forming step)

Water having flocks formed therein was sucked from the inside of a cylindrical die provided with a wire net having an opening of 1 mm on an outer surface thereof to laminate the flocks on the surface of the wire net, thereby forming a cylindrical laminate. Though the wire net had an opening of 1 mm, the carbon fibers formed the flocks, and hence, almost all of the carbon fibers did not pass through the net. After standing for a while as it was and removing water by means of a gravitational force, the resultant was dried by a dryer at 60 °C.

(4) Molding step (formation of laminate of thin piece body precursor)

A wire net-free cylindrical die was inserted into the inside of the laminate obtained in the preceding step, and the surface was further covered by a sealing film. The resultant was placed in an autoclave without laminating the laminates and pressurized while applying heat at 150 °C. A pressurizing pressure was set to 2 MPa.

(5) Curing step

Subsequent to the preceding step, the laminate was allowed to stand for 2 hours as it was under a maximum pressure in the autoclave. According to this step, the first binder (phenol resin) was cured.

(6) First degreasing step

The die of the laminate obtained in the preceding curing step was removed, and the resultant was heated in a reducing atmosphere furnace. Heating was performed at a temperature rise rate of 70 °C/hour, and at a point of time when the temperature reached a maximum temperature of 550 °C, the resulting laminate was kept for one hour and then allowed to stand for cooling to room temperature. Here, the reducing atmosphere is formed by heating the laminate with an organic material powder which can generate a large amount of hydrocarbon gas in a closed container, and purging the closed container with the hydrocarbon gas from the organic material.

(7) (Impregnation step)

In the case where a desired bulk density is not obtained until the first degreasing step, impregnation is further performed.

In this Example, the laminate after degreasing was placed in an autoclave heated at 200 °C, and after drawing a vacuum, a pitch having a softening point of about 80 °C was allowed to flow in. The laminate was pressurized at 4 MPa, thereby impregnating the pitch thereinto.

(8) (Second degreasing step)

The laminate having gone through the impregnation step is again subjected to degreasing. The degreasing was performed under a condition the same as the condition in the first degreasing step of (6). The impregnating step and the second degreasing step can be performed repeatedly.

(9) Calcination step

The laminate having been subjected to the impregnation and the second degreasing step was finally calcined. The laminate was heated at a temperature rise rate of 150 °C/hour in a reducing atmosphere, and at a point of time when the temperature reached a maximum temperature of 2,000 °C, the resulting laminate was kept for 15 seconds and then allowed to stand for cooling to room temperature. The reducing atmosphere is formed by a mixed gas of hydrogen, carbon monoxide gas and hydrocarbon gas generated by heating while putting the laminate in carbon powders in a state of preventing oxide from the outside. According to this calcination step, a matrix was formed from the first binder. According to the presence of the matrix, a bonding force of carbon fibers is strengthened, and strength can be revealed. In this way, there was obtained a cylindrical structure having an inner diameter of 1,000 mm, a height of 1,000 mm, a thickness of 25 mm.

<Example 2>

A C/C composite material molded body was obtained in the same manner as that in Example 1, except for changing the average fiber length of the carbon fibers to 800 $\mu$m.

Comparative Example 1>

A molded body of Comparative Example 1 made of a C/C composite material having felts laminated therein was manufactured. First all, PAN based carbon fibers were cut into a size of 30 mm, thereby forming a sheet-like felt. Subsequently, the felt was dipped in a methanol solution of a phenol resin, from which was then forked a carbon fiber sheet prepreg having a thickness of 3 mm by using a roll press. The thus formed carbon fiber sheet prepreg was allowed to revolve around a mandrel, thereby forming a molded body having felt-like sheets laminated thereon.

Subsequently, the molded body molded in the preceding step was kept at 150 °C to cure the phenol resin, thereby fixing the shape.

Subsequently, degreasing, impregnation, degreasing and calcination were performed in the same manner as that in Example 1, thereby obtaining a cylindrical molded body having an inner diameter of 600 mm, a height of 600 mm and a thickness of 25 mm.

<Comparative Examples 2 to 11>

A C/C composite material molded body of Comparative Example 2 was manufactured in the same manner as that in Example 1, except that the pressurizing pressure in the molding step (4) was changed to 0.8 MPa.

Molded bodies of commercially available C/C composite materials shown in Table 2 were prepared as Comparative Examples 3 to 11. Comparative Example 3 is manufactured by means of filament winding; Comparative Examples 4 to 10 are manufactured by means of cloth lamination; and Comparative Example 11 is manufactured by means of felt lamination.

<Evaluation of physical properties>

Bulk density and bending strength

Two samples for measuring physical properties of a rectangular parallelepiped shown in Fig. 22A, each of which was longer in a height direction of the cylinder, were obtained from the structure obtained in each of Example 1 and Comparative Example 1. The sample for measuring physical properties was measured with respect to a bulk density and a bending strength. The bulk density of the molded body was calculated by dividing the mass of the C/C composite material by the volume thereof. The bending strength was measured by performing a three-point bending test using an autograph (AG-IS Model: 0 to 5 kN), manufactured by Shimadzu Corporation. Figs. 22A and 22B are schematic views showing a method of cutting out a sample for measuring physical properties and a test direction of a three-point bending test. The three-point bending test was performed from two directions of a vertical direction (laminating direction of thin piece body) V and a parallel direction P relative to a surface direction of the structure, as shown in Fig. 22B.

Table 1 shows measuring results of the bulk density and the bending strength of the C/C composite material molded body according to Example 1 and Comparative Example 1.

Table 1

| | Bulk density (g/cm$^3$) | Bending strength in the vertical direction *1 (MPa) | Bending strength in the parallel direction *2 (MPa) |
|---|---|---|---|
| Example 1 | 1.28 | 69.0 | 75.7 |
| Comparative Example 1 | 1.35 | 19.6 | 47.2 |
| *1: Three-point bending test from the surface direction and the vertical direction of the molded body<br>*2: Three-point bending test from the surface direction and the parallel direction of the molded body | | | |

In Examples 1 and 2 and Comparative Examples 1 to 11, the following physical properties were determined.

Fiber volume fraction

A mass and a true density of the used carbon fibers were measured, and a volume of the carbon fibers was calculated by dividing the mass of the carbon fibers by the true density of the carbon fibers. A mass and an apparent density (bulk density) of the C/C composite material were measured, and a volume of the C/C composite material was calculated by dividing the mass of the C/C composite material by the bulk density of the C/C composite material.

Incidentally, four samples of 10 mm x 10 mm x 60 mm were processed from the C/C composite material molded body, and values calculated from the measured volume and mass were averaged. A fiber volume fraction was calculated by dividing the volume of the carbon fibers by the volume of the C/C composite material.

Elastic modulus, breaking strength and breaking strain

The measurement was performed using an autograph (AG-IS Model: 0 to 5 kN), manufactured by Shimadzu Corporation. Incidentally, the breaking strength was determined as a tensile strength.

The manufacturing method of each of the composite materials of Examples 1 and 2 and Comparative Examples 1 to 11 is shown in Table 2 along with the measurement results of the average fiber length, fiber volume fraction, bulk density, elastic modulus, breaking strength (tensile strength) and breaking strain thereof.

Table 2

| | Manufacturing method | Average fiber length | Fiber volume fraction (%) | Bulk density (g/cm$^3$) | Elastic modulus (GPa) | Breaking strength (tensile strength) (MPa) | Breaking strain (ppm) |
|---|---|---|---|---|---|---|---|
| Example 1 | Sheet-forming | 150 $\mu$m | 35 | 1.3 | 11 | 98 | 8909 |
| Example 2 | Sheet-forming | 800 $\mu$m | 37 | 1.3 | 14 | 124 | 8857 |
| Comparative Example 1 | Felt lamination | 30 mn | 41 | 1.4 | 41 | 183 | 4463 |
| Comparative Example 2 | Sheet-forming | 150 $\mu$m | 26 | 1.1 | 6 | 31 | 5000 |
| Comparative Example 3 | Filament winding | Continuous fibers | - | 1.5 | 100 | 300 | 3000 |
| Comparative Example 4 | Cloth lamination | Continuous fibers | - | 1.6 | 80 | 350 | 4375 |
| Comparative Example 5 | Cloth lamination | Continuous fibers | - | 1.4 | 30 | 60 | 2000 |
| Comparative Example 6 | Cloth lamination | Continuous fibers | - | 1.5 | 55 | 185 | 3364 |
| Comparative Example 7 | Cloth lamination | Continuous fibers | - | 1.6 | 50 | 170 | 3400 |
| Comparative Example 8 | Cloth lamination | Continuous fibers | - | 1.5 | 46 | 140 | 3043 |
| Comparative Example 9 | Cloth lamination | Continuous fibers | - | 1.5 | 42 | 130 | 3095 |
| Comparative Example 10 | Cloth lamination | Continuous fibers | - | 1.5 | 45 | 140 | 3111 |
| Comparative Example 11 | Felt lamination | About 50 mm | - | 1.6 | 65 | 98 | 1508 |

Fig. 20 shows the results obtained by measuring a relation of elastic modulus and breaking strength (tensile strength) on the physical analysis of the C/C composite material and is a graph of a relation of elastic modulus and tensile strength of the Examples and Comparative Examples. Fig. 21 shows the results obtained by measuring a relation of elastic modulus and breaking strain and is a graph of a relation of elastic modulus and breaking strain of the Examples and Comparative Examples. It is noted from Table 2 and the graphs of Figs. 20 and 21 that according to the C/C composite material of Examples, not only the high breaking strength but the low elastic modulus can be kept.

Observation of surface and section

The surface and section of the molded body obtained in each of Example 1 and Comparative Example 1 were observed by various photographs.

(Preparation method of samples for polarizing microscopic and scanning electron microscopic (SEM) photographs)

The sample of the C/C composite material of each Example 1 and Comparative Example 1 was embedded in an epoxy resin, and a section was fabricated by means of a mechanical polishing method, followed by performing a flat milling treatment (at 45° for 3 minutes). A section having been subjected to Pt-Pd sputtering was observed by FE-SEM and a polarizing microscope. Here, the epoxy resin is one used for fixing a sample for cutting out a flat surface from a soft sample, an easily deformable sample, a fine sample or the like. For example, though an end surface of a powder, a section of a fiber or the like is in general hardly subjected to section processing, it becomes possible to achieve the observation by fixing with a fixing agent such as an epoxy resin in such a way.

(Analysis apparatus and measurement condition)

[Flat milling]

Apparatus: Hitachi, E-3200
Output: 5 kV, 0.5 mA

[FE-SEM]

Apparatus: JEOL, JSM-7001F
Accelerating voltage: 5 kV
Observation image: Secondary electron image

[Polarizing microscope]

Apparatus: manufactured by Nikon

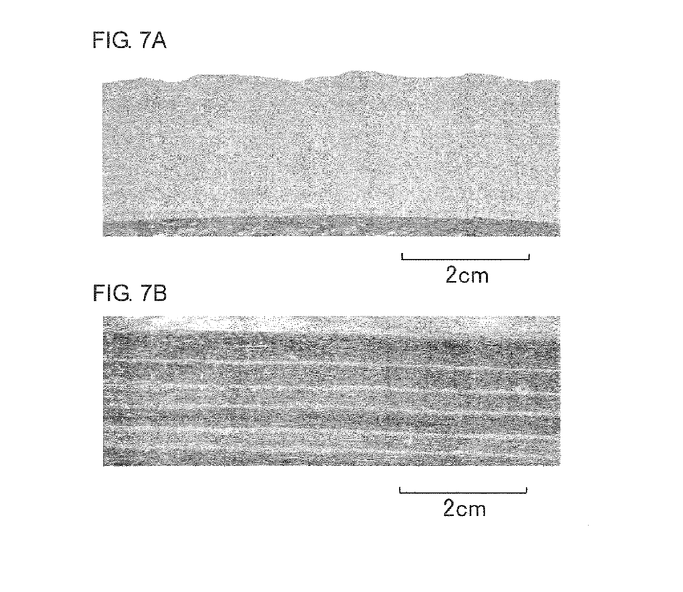

Fig. 7A is a photograph of a section of the molded body of Example 1, and Fig. 7B is a photograph of a section of the molded body of Comparative Example 1. The vertical direction in the photograph is a thickness direction (laminating direction) of the molded body, and the horizontal direction in the photograph is a surface direction. In the molded body of Example 1, it is noted that a uniform molded body in which thin piece bodies oriented in a surface direction of the molded body are formed, and boundaries of the thin piece bodies are dispersed is formed. In the molded body of Comparative Example 1, it is noted that a layer structure of annual rings is formed.

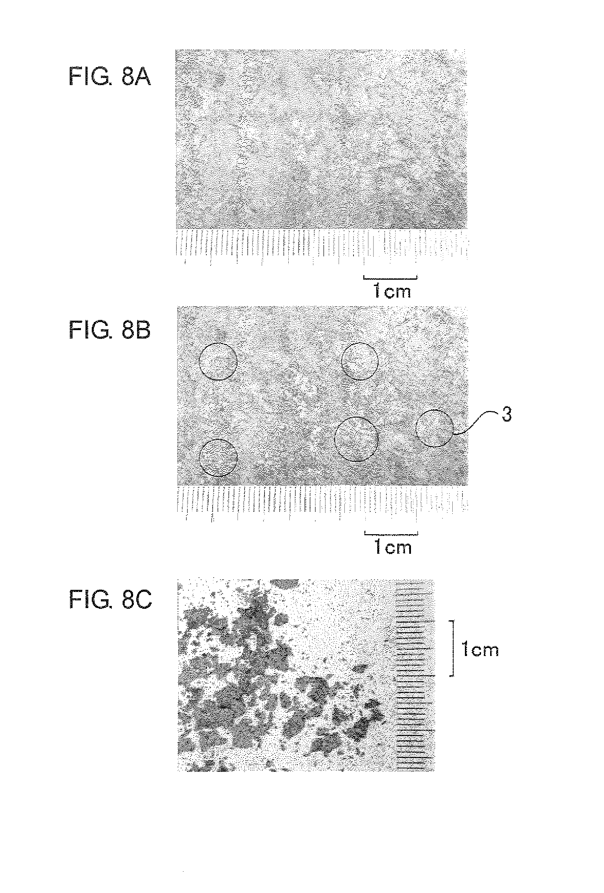

Fig. 8A is an enlarged photograph of the surface of the molded body of Example 1 (inner surface of cylindrical molded body). Fig. 8B is a photograph of thin piece bodies observed on the surface of the molded body of Fig. 8A. Fig. 8C is a photograph of thin piece bodies separated from the surface of the molded body of Fig. 8A. A solid line region in Fig. 8B shows each of the thin piece bodies 3. Fig. 8C shows a photograph of the thin piece bodies separated from the surface of the molded body of Fig. 8A. Since the inner surface of the molded body is molded by using the support material 25, a flat surface which is free from large irregularities is obtained. However, it can be confirmed that thin piece bodies oriented in parallel to the surface direction as formed from flocks are exposed on the surface. Such thin piece bodies can be gradually peeled away from a site where an end thereof is exposed because the constituting carbon fibers are oriented in parallel to the surface direction; however, the thin piece bodies are merely separated one by one, and separation reaching the whole of the carbon fiber molded body does not occur. Such separation can also be similarly confirmed on the fracture surface formed by breaking the carbon fiber molded body in a layer direction thereof.

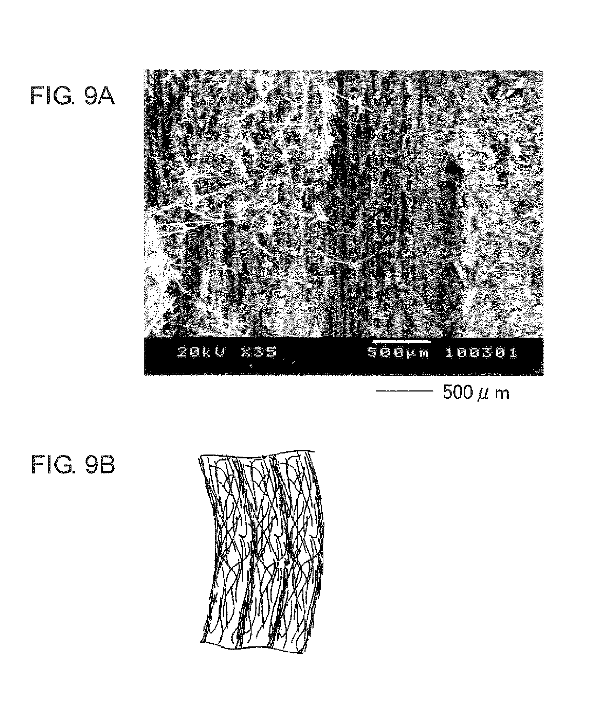

Fig. 9A shows a scanning electron microscopic (SEM) photograph of a section of the molded body of Comparative Example 1, and Fig. 9B shows a schematic view of Fig. 9A. The horizontal direction in the photograph is a thickness direction of the molded body (laminating direction of the sheet), and the vertical direction in he photograph is a surface direction. It can be confirmed that the fibers in a sheet interface part are strongly oriented in parallel along the boundary.

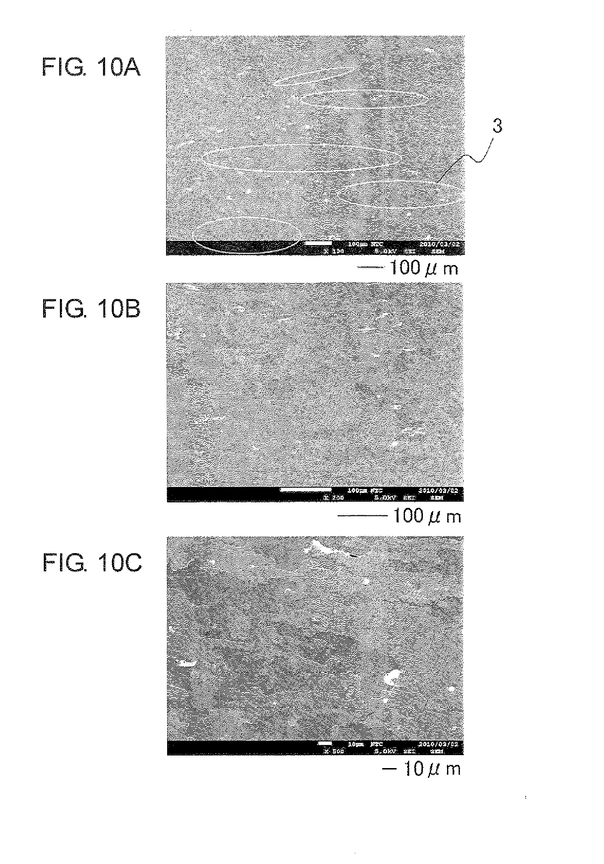

Figs. 10A to 10C are scanning electron microscopic (SEM) photograph of a section of the molded body of Example 1. The vertical direction in the photograph is a thickness direction of the molded body (laminating direction of the thin piece body), and the horizontal direction in the photograph is a surface direction. Fig. 10A is an SEM photograph of a section of the molded body of Example 1 with a magnification of 100; Fig. 10B is an SEM photograph of a section of the molded body of Example 1 with a magnification of 200; and Fig. 10C is an SEM photograph of a section of the molded body of Example 1 with a magnification of 500. Fig. 10A shows thin piece bodies observed in the SEM photograph of the section. A solid line region in Fig. 10A shows each of the thin piece bodies 3. Fig. 10B is a more enlarged SEM photograph of the thin piece body portion of Fig. 10A. Fig. 10C is a still more enlarged SEM photograph of the thin piece body portion of Fig. 10B. As shown in Fig. 10A, it can be confirmed that the thin piece bodies are laminated while being oriented in parallel to the surface direction of the carbon fiber molded body.

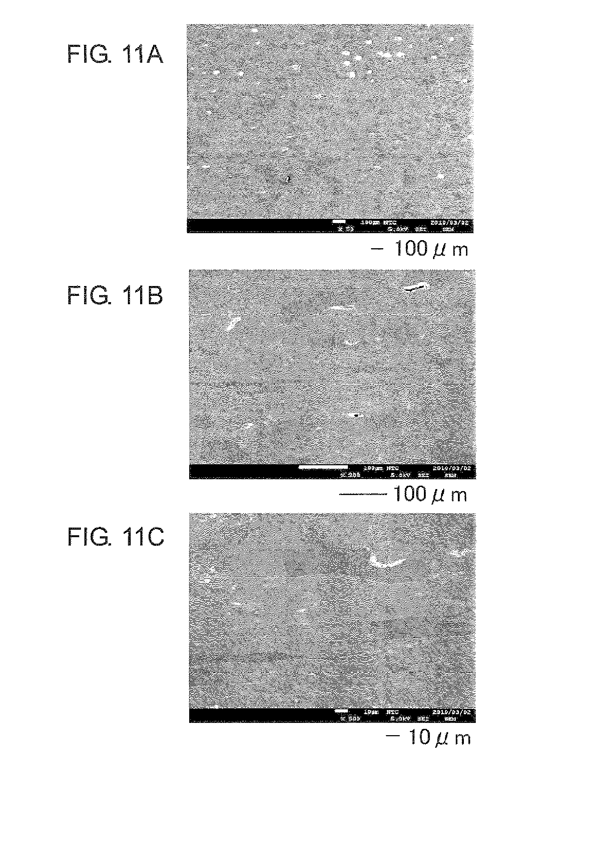

Figs. 11A to 11D are scanning electron microscopic (SEM) photographs of a section of the molded body of Comparative Example 1, in which the vertical direction in the photograph is a thickness direction of the molded body (laminating direction of the thin piece body), and the horizontal direction in the photograph is a surface direction. Fig. 11A is an SEM photograph of a section of the molded body of Comparative Example 1 with a magnification of 100; Fig. 11B is an SEM photograph of a section of the molded body of Comparative Example 1 with a magnification of 200; and Fig. 11C is an SEM photograph of a section of the molded body of Comparative Example 1 with a magnification of 500. Fi.g. 11B is an enlarged SEM photograph of Fig. 11 A, and Fig. 11C is a more enlarged SEM photograph of Fig. 11A. As is confirmed from Figs. 11B and 11C, a region where the carbon fibers are strongly oriented in parallel in the surface direction of the carbon fiber molded body is present, and it is confirmed that in this region, connection of fibers in the thickness direction is not substantially formed. For that reason, it is noted that in Comparative Example 1, the region where the fibers are strongly oriented relative to a tension in the vertical direction in each of the photographs of Figs. 11B and 11C becomes a defect.

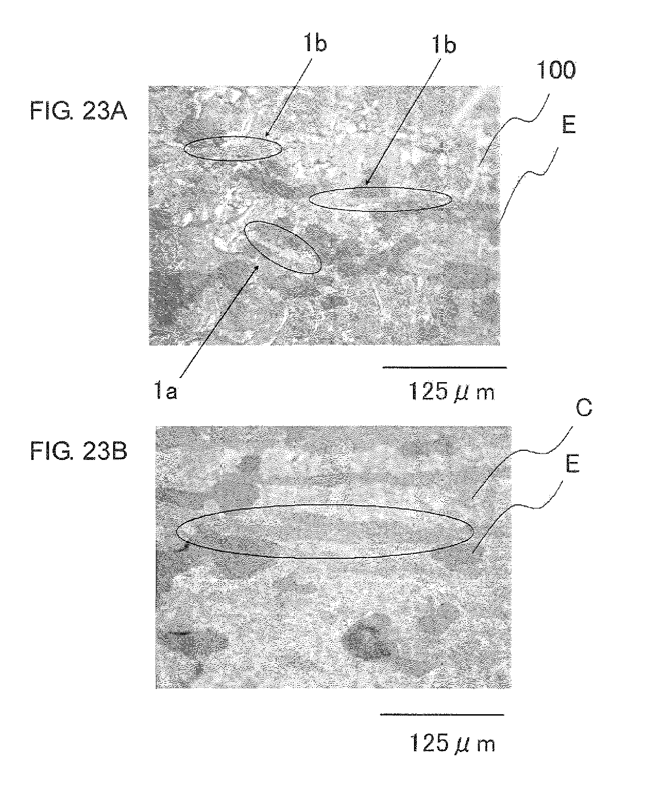

Fig. 23A is a polarizing microscopic photograph of a section of the molded body of Example 1. The vertical direction in the photograph is a thickness direction of the molded body (laminating direction of the thin piece body), and the horizontal direction in the photograph is a surface direction. Also, Fig. 23B is a polarizing microscopic photograph of a section of the molded body of Comparative Example 1. The vertical direction in the photograph is a thickness direction of the molded body (laminating direction of the sheet), and the horizontal direction in the photograph is a surface direction. In a polarizing microscope, a different color is observed depending upon the orientation direction of a crystal, and hence, the fibers and the matrix can be easily distinguished from each other. The fibers are observed in a linear shape, an oval shape or a circular shape depending upon a relation with the observing surface. Also, a site which is deeply gray and is free light and shade in Figs 23A and 23B is an epoxy resin E used as a sealing resin, and other regions are the C/C composite material molded body 100 (thin piece body including the matrix and the carbon fibers) in Fig. 23A and a C/C composite material molded body C in Fig. 23B, respectively.

In a region surrounded by a solid line in Fig. 23A, a carbon fiber component 1a connecting the thin piece bodies adjoining in the vertical direction (laminating direction of the thin piece body) of the polarizing microscopic photograph to each other, can be confirmed. On the other hand, in Fig. 23B, a carbon fiber component connecting the thin piece bodies to each other is not confirmed.

In the polarizing microscopic photograph as shown in Fig. 23A, in order that carbon fibers connecting thin piece bodies to each other may be observed, not only the carbon fibers must be present on the observing surface, but the longitudinal direction of the carbon fibers must be contained in the observed surface. In Fig. 23A, a carbon fiber component connecting the thin piece bodies adjoining in the vertical direction (laminating direction of the thin piece body) in the photograph to each other could be confirmed, and therefore, it may be considered that many other carbon fiber components connecting the thin piece bodies adjoining in the vertical direction (laminating direction of the thin piece body) to each other, which cannot be observed, are also present.

As shown in the measurement results of Table 1, in the molded body obtained in the present Example 1, the three-point bending strength of the molded body was 75.7 MPa in the vertical direction and 69.0 MPa in the parallel direction to the surface direction of the molded body, respectively, so that a substantially equal three-point bending strength was obtained in any of the vertical direction and the parallel direction to the surface direction of the molded body. This is because it may be considered that in the molded body of the invention, the thin piece bodies are constituted upon being laminated, and furthermore, a homogenous molded body is obtained due to the presence of a carbon fiber component connecting the thin piece bodies adjoining in the thickness direction (laminating direction of the thin piece body) to each other.

In the molded body obtained in the present Comparative Example 1, the three-point bending strength is 19.6 MPa in the vertical direction (laminating direction of the thin piece body) to the surface direction of the molded body, a value of which is considerably low as compared with 47.2 MPa in the parallel direction to the surface direction of the molded body (three-point bending strength in a P direction).

In the molded body obtained in the present Comparative Example 1, the strength in the vertical direction to the surface direction of the molded body is significantly lower than that in the parallel direction to the surface direction of the molded body. In the three-point bending test in the vertical direction to the surface direction of the molded body, the molded body was broken in such a manner that the laminated sheet was separated.

In the present Comparative Example 1, the molded body is configured through lamination of the sheets, and a carbon fiber component connecting the sheets to each other upon being oriented in the thickness direction is not present. Thus, a joining force between the sheets was weak, and in the three-point bending test in the vertical direction to the surface direction of the molded body, a remarkable lowering of the strength was found. Also, even in the three-point bending test in the parallel direction to the surface direction of the molded body, separation of the sheet was found, and only low strength was obtained as compared with that in Example 1.

It may be predicted that the same results are also obtainable in Example 2 and Comparative Examples 2 to 11.

Also, in the polarizing microscopic photograph of Example 1 shown in Fig. 23A, it is noted that the carbon fiber component is present in a bare-fiber state. That is, the carbon fiber component connecting the thin piece bodies adjoining in the laminating direction of the thin piece body to each other, which is expressed by "1a", and the carbon fiber component oriented in the horizontal direction in the photograph, namely the surface direction of the molded body, which is expressed by "1b", do not form a strand. On the other hand, as shown in a region surrounded by a solid line in the polarizing microscopic photograph of Comparative Example 1 as shown in Fig. 23B, it is noted that the carbon fibers form a strand.

It may be conjectured that the same results are also obtainable in Example 2 and Comparative Examples 2 to 11.

[Industrial Applicability]

Since the C/C composite material molded body according to an embodiment of the present invention has high strength, high chemical stability and high heat resistance, it is useful for silicon single crystal pull-up apparatuses, compound semiconductor crystal pull-up apparatuses, manufacturing apparatuses of silicon for solar cell (for example, silicon thin film forming apparatuses, manufacturing apparatuses of silicon ingot, etc.), members to be used at a high temperature, such as apparatus parts in the atomic energy, nuclear fusion or metallurgy field or the like, fields required to keep high strength against a temperature change, such as space parts and aerospace parts, and so on.

**Claims**

1. A carbon fiber-reinforced carbon composite material comprising:

   carbon fibers; and
   a carbonaceous matrix,
   wherein the carbon fiber-reinforced carbon composite material is integrally formed;
   wherein the carbon fibers are a linear fiber existing in a bare-fiber state within the carbonaceous matrix and having an average fiber length of less than 1.0 mm, and
   wherein the carbon fiber-reinforced carbon composite material has a bulk density of 1.2 g/cm$^3$ or more.

2. The carbon fiber-reinforced carbon composite material according to claim 1,
   wherein the carbon fiber-reinforced carbon composite material has an elastic modulus ranging from 5 GPa to 15 GPa.

3. The carbon fiber-reinforced carbon composite material according to claim 1 or 2,
   wherein the carbon fiber-reinforced carbon composite material has a tensile strength of 50 MPa or more.

4. The carbon fiber-reinforced carbon composite material according to any one of claims 1 to 3,
   wherein the carbon fiber-reinforced carbon composite material has a fiber volume fraction ranging from 30 % to 50 %.

5. The carbon fber-reinforced carbon composite material according to any one of claims 1 to 4,
   wherein the carbon fiber-reinforced carbon composite material is used for a structural member of a furnace.

6. The carbon fiber-reinforced carbon composite material according to any one of claims 1 to 5,
   wherein the carbon fiber-reinforced carbon composite material is used for a semiconductor manufacturing apparatus.

7. A method for manufacturing a carbon fiber-reinforced carbon composite material according to any one of claims 1 to 6, the method comprising:

   spreading linear carbon fibers having an average fiber length of less than 1.0 mm into a bare fiber;
   forking a preform including the linear carbon fibers and a precursor component of a carbonaceous matrix, in which the carbon fibers are present in a bare-fiber state;
   integrally press molding the preform; and
   calcining the press molded preform to form the carbonaceous matrix from the precursor component.

8. The method according to claim 7,
   wherein the step of spreading the liner carbon fibers is a step of adding and dispersing the precursor component of the carbonaceous matrix and the linear carbon fibers having the average fiber length of less than 1.0 mm, in a liquid, thereby forming a slurry for spreading the carbon fibers; and
   wherein the step of forming the preform includes a step of forming flocks including the carbon fibers and the precursor component of the carbonaceous matrix and a step of filtering the flocks.

## FIG. 1A

100

## FIG. 1B

## FIG. 1C

## FIG. 1D

100

100S

3

1

2

FIG. 2A

FIG. 2B

FIG. 2C

FIG. 3

```
                                    ┌─────────────────────────────┐──── SA
                                    │    (A) FORMING FLOCK        │
                                    └─────────────────────────────┘
                                                  │
                                    ┌─────────────────────────────┐──── SB
                                    │ (B) FORMING LAMINATE OF FLOCK│
                                    └─────────────────────────────┘
                                                  │               ──── SC
                                    ┌─────────────────────────────┐
                                    │       (C) MOLDING           │
                                    └─────────────────────────────┘
                                    ┌─────────────────────────────┐──── SD
                                    │         CURING              │
                                    └─────────────────────────────┘
                                    ┌─────────────────────────────┐
                                    │     (D) CALCINATING         │
                                    └─────────────────────────────┘
```

FIG. 4A1

FIG. 4A2

FIG. 4B

FIG. 4C

FIG. 4D

FIG. 5A

200

FIG. 5B          FIG. 5C          FIG. 5D

200

3

1

200S
200i
200o

2

FIG. 6B

FIG. 6C

FIG. 6D

FIG. 7A

2cm

FIG. 7B

2cm

FIG. 8A

1cm

FIG. 8B

3

1cm

FIG. 8C

1cm

FIG. 9A

——— 500 $\mu$ m

FIG. 9B

FIG. 10A

3

—— 100 μm

FIG. 10B

—— 100 μm

FIG. 10C

— 10 μm

FIG. 11A

− 100 $\mu$m

FIG. 11B

100 $\mu$m

FIG. 11C

− 10 $\mu$m

FIG. 12A

FIG. 12B

300

300o    300i

300a

300T

300a

300T

FIG. 13A    FIG. 13B    FIG. 13C

30
300a

300a

30E

300T

300R

3

300i

300o

FIG. 14A

FIG. 14B

FIG. 15A

FIG. 15B

FIG. 16A

FIG. 16B

500a

500R

500b

3

500S

500i

500o

FIG. 17A

600

FIG. 17B

600

FIG. 17C

600S    3

FIG. 17D

1

2

FIG. 18A1

FIG. 18A2

FIG. 18B

FIG. 18C

FIG. 18D

FIG. 19A          FIG. 19B

FIG. 20

## FIG. 21

## FIG. 22A

## FIG. 22B

FIG. 23A

1b  1b  100  E

1a

$125\,\mu\text{m}$

FIG. 23B

C  E

$125\,\mu\text{m}$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1160373 A
- JP H10152391 A
- JP 2000143360 A
- JP 2002068851 A
- JP 2002097082 A